# EUROPEAN PATENT APPLICATION

(11) **EP 4 836 363 A1**
(43) Date of publication of application: **04.11.2026**
(21) Application number: 24922439.5
(22) Date of filing: 16.12.2024
(51) Int. Cl.: H04L 25/02

(54) **ELECTRONIC DEVICE AND METHOD FOR CHANNEL ESTIMATION IN WIRELESS COMMUNICATION SYSTEM**

(30) Priority: 31.01.2024 KR 20240015407
(71) Applicant: Samsung Electronics Co., Ltd., Suwon-si, Gyeonggi-do 16677 (KR)
(72) Inventor: LEE, Ikbeom, Suwon-si Gyeonggi-do 16677 (KR)
(74) Representative: Gulde & Partner
(86) International application number: PCT/KR2024/020437
(87) International publication number: WO 2025/164930

(57) **Abstract**

This electronic device comprises: at least one processor including a processing circuit; and a memory storing instructions and including one or more storage media, wherein the instructions, when executed individually or collectively by the at least one processor, may cause the electronic device to: acquire uplink RSs in an estimated RS symbol of an estimated slot from among a plurality of slots for uplink transmission; be mapped across at least two slots from among the plurality of slots for uplink transmission; acquire a first channel estimation result for a set of RS symbols other than the estimated RS symbol and a second channel estimation result for an RS symbol adjacent to the estimated RS symbol from among the RS symbols of the set of RS symbols; and acquire a channel estimation result for the estimated slot on the basis of the result of comparing a first estimation index using the first channel estimation result and the uplink RSs with a second estimation index using the second channel estimation result and the uplink RSs.

## Description

### [Technical Field]

The present disclosure relates to a wireless communication system, and more particularly, relates to an electronic device and a method for channel estimation in the wireless communication system.

### [Background Art]

In a wireless communication system, a terminal transmitting or receiving a wireless signal may move. The movement of the terminal causes a change in a wireless channel. A communication device providing a network may estimate a channel change due to distribution, diffusion, variation, and the like on a frequency due to the movement of the terminal.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments of the present disclosure, an electronic device is provided. The electronic device may comprise at least one processor including processing circuitry. The electronic device may comprise memory, including one or more storage mediums, storing instructions. The instructions, when executed by the at least one processor individually or collectively, may cause the electronic device to obtain uplink reference signals (RSs) in an estimation RS symbol of an estimation slot among a plurality of slots for uplink transmission, obtain a first channel estimation result for a set of RS symbols, which is different from the estimation RS symbol and mapped across at least two slots of the plurality of slots for uplink transmission, obtain a second channel estimation result for an RS symbol adjacent to the estimation RS symbol among RS symbols of the set of RS symbols, and obtain a channel estimation result for the estimation slot, based on a comparison result between a first estimation metric using the uplink RSs and the first channel estimation result and a second estimation metric using the uplink RSs and the second channel estimation result.

In embodiments of the present disclosure, a method performed by an electronic device is provided. The method may comprise obtaining uplink reference signals (RSs) in an estimation RS symbol of an estimation slot among a plurality of slots for uplink transmission, obtaining a first channel estimation result for a set of RS symbols, which is different from the estimation RS symbol and mapped across at least two slots of the plurality of slots for uplink transmission, obtaining a second channel estimation result for an RS symbol adjacent to the estimation RS symbol among RS symbols of the set of RS symbols, and obtaining a channel estimation result for the estimation slot, based on a comparison result between a first estimation metric using the uplink RSs and the first channel estimation result and a second estimation metric using the uplink RSs and the second channel estimation result.

In embodiments of the present disclosure, a non-transitory computer readable storage medium is provided. The non-transitory computer readable storage medium, when executed by a processor, may comprise instructions that cause an electronic device to perform operations including obtaining uplink reference signals (RSs) in an estimation RS symbol of an estimation slot among a plurality of slots for uplink transmission, obtaining a first channel estimation result for a set of RS symbols, which is different from the estimation RS symbol and mapped across at least two slots of the plurality of slots for uplink transmission, obtaining a second channel estimation result for an RS symbol adjacent to the estimation RS symbol among RS symbols of the set of RS symbols, and obtaining a channel estimation result for the estimation slot, based on a comparison result between a first estimation metric using the uplink RSs and the first channel estimation result and a second estimation metric using the uplink RSs and the second channel estimation result.

In embodiments of the present disclosure, an electronic device is provided. The electronic device may comprise at least one processor including processing circuitry. The at least one processor may be configured to obtain uplink reference signals (RSs) in an estimation RS symbol of an estimation slot among a plurality of slots for uplink transmission, obtain a first channel estimation result for a set of RS symbols, which is different from the estimation RS symbol and mapped across at least two slots of the plurality of slots for uplink transmission, obtain a second channel estimation result for an RS symbol adjacent to the estimation RS symbol among RS symbols of the set of RS symbols, and obtain a channel estimation result for the estimation slot, based on a comparison result between a first estimation metric using the uplink RSs and the first channel estimation result and a second estimation metric using the uplink RSs and the second channel estimation result.

### [Description of the Drawings]

The above and other aspects, features, and advantages of certain embodiments of the present disclosure will be more apparent from the following description taken in conjunction with the accompanying drawings.
FIG. 1 illustrates a wireless communication system.
FIG. 2 illustrates network entities in accordance with a distributed deployment.
FIG. 3 illustrates an example of a resource structure in a time region and a frequency region.
FIG. 4 illustrates an example of a function split of network entities.
FIG. 5 illustrates an example of channels in a communication standard.
FIG. 6A, FIG. 6B, and FIG. 6C illustrate an example of reference signals (RSs) in a slot.
FIG. 7A and FIG. 7B illustrate examples of slot aggregation.
FIG. 7C illustrates an example of channel estimation performance in accordance with a Doppler frequency.
FIG. 8A and FIG. 8B illustrate examples of slots of slot aggregation.
FIG. 9A, FIG. 9B, FIG. 9C, and FIG. 9D illustrate examples of a comparison between channel estimation using at least two slots and channel estimation using one slot.
FIG. 10 illustrates an example of a complex plane for an equalization value of a received signal.
FIG. 11 illustrates an operation flow of an electronic device for channel estimation.
FIG. 12A and FIG. 12B are diagrams for describing a relationship between a comparison metric and a Doppler frequency.
FIG. 13 illustrates examples of channel estimation performance in accordance with a Doppler frequency.
FIG. 14A illustrates a functional configuration of an electronic device.
FIG. 14B illustrates a functional configuration of a wireless communication device.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a data type (e.g., list, set, subset), a term for an computation state (e.g., step, operation, procedure), a term referring to data (e.g., packet, user stream, information, bit, symbol, codeword), a term referring to a resource (e.g., symbol, slot, subframe, radio frame, subcarrier, resource element (RE), resource block (RB), bandwidth part (BWP), occasion), a term referring to a channel, a term referring to network entities, a term referring to a component of a device, and the like, used in the following description are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments using terms used in some communication standards (e.g., 3rd Generation Partnership Project (3GPP), European Telecommunications Standards Institute (ETSI), extensible radio access network (xRAN), or open-radio access network (O-RAN)), but this is only an example for description. Various embodiments of the present disclosure may be easily modified and applied in another communication system.

In the present disclosure, a communication quality may be at least one of a reference signal received power (RSRP), a beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), an error vector magnitude (EVM), a bit error rate (BER), and a block error rate (BLER). In addition to the above-described examples, it is apparent that other terms having an equivalent technical meaning or other metrics indicating a channel quality may be used. Hereinafter, in the present disclosure, the communication quality being high means a case that a communication quality value related to a signal magnitude is large or a communication quality value related to an error rate is small. As the communication quality is higher, it may mean that a smooth wireless communication environment is guaranteed. In addition, an optimal beam may mean a beam having the highest communication quality among beams.

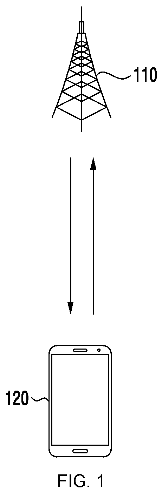

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as 'access point (AP)', 'radio access network (RAN) node' 'eNodeB (eNB)', '5th generation node', 'next generation nodeB (gNB)', 'wireless point', 'transmission/reception point (TRP)', 'communication node', 'wireless communication device', 'wireless communication equipment', 'network node', 'network entity' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 26 GHz, 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

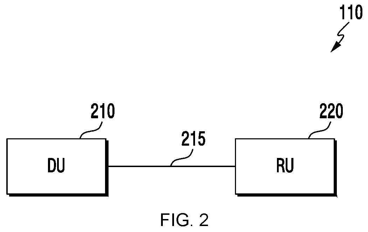

FIG. 2 illustrates network entities according to a distributed deployment. For example, the network entities may include a digital unit (DU) and a radio unit (RU) 220 (or a massive multiple input multiple output unit (MMU)). For example, the network entities may be connected through a fronthaul. Unlike a backhaul between a base station and a core network, the fronthaul refers to entities (e.g., the DU 210 and the RU 220) between a wireless LAN and the base station. In FIG. 2, The DU 210 illustrates an example of a fronthaul structure between one RU 220, but this is only for convenience of description and the present disclosure is not limited thereto. In other words, an embodiment of the present disclosure may also be applied to a fronthaul structure between one DU and a plurality of RUs. For example, an embodiment of the present disclosure may be applied to a fronthaul structure between one DU and two RUs. In addition, an embodiment of the present disclosure may be applied to a fronthaul structure between one DU and three RUs.

Referring to FIG. 2, a base station 110 may include the DU 210 and the RU 220. A fronthaul 215 between the DU 210 and the RU 220 may be operated through an Fx interface. For operation of the fronthaul 215, for example, an interface such as enhanced common public radio interface (eCPRI) and radio over ethernet (ROE) may be used. According to an implementation example, in addition to the DU, the DU 210 may be referred to as a baseband unit (BBU), a digital BBU, a baseband digital unit, a processing unit, digital processing circuitry, baseband processing circuitry, a baseband processing unit, and/or an equivalent technical term. According to an implementation example, in addition to the RU, the RU 220 may be referred to as a remote unit, a radio demote head (RRH), radio processing circuitry, a radio processing unit, an antenna integrated radio, an air radio device, an air scale communication device, a radio device, a radio communication device, and/or an equivalent technical term. In addition, according to an implementation example, a network entity connected to the DU 210 is described as the RU 210 in the present disclosure, but the massive multiple input multiple output unit (MMU) may be connected to the DU 210 and used instead of the RU 210.

As a communication technology develops, mobile data traffic increases, and accordingly, a bandwidth requirement required in a fronthaul between a digital unit and a radio unit has greatly increased. In a deployment such as a centralized/cloud radio access network (C-RAN), a DU may be implemented to perform functions for a packet data convergence protocol (PDCP), a radio link control (RLC), a media access control (MAC), and a physical (PHY), and an RU may be implemented to further perform functions for the PHY layer in addition to a radio frequency (RF) function. The DU 210 may be responsible for an upper layer function of a wireless network.

For example, the DU 210 may perform a function of the MAC layer and a portion of the PHY layer. Herein, the portion of the PHY layer refers to being performed at a relatively higher stage among the functions of the PHY layer, and, as an example, may include channel encoding (or channel decoding), scrambling (or descrambling), modulation (or demodulation), and layer mapping (or layer demapping). According to an embodiment, in a case that the DU 210 conforms to an O-RAN standard, the DU 210 may be referred to as an O-DU. The DU 210 may be replaced with and represented as a first network entity for a base station (e.g., gNB) in embodiments of the present disclosure as necessary. The RU 220 may be responsible for lower layer functions of the wireless network. For example, the RU 220 may perform a portion of the PHY layer and an RF function. Herein, the portion of the PHY layer refers to being performed at a relatively lower stage than the DU 210 among the functions of the PHY layer, and, as an example, may include iFFT transformation (or FFT transformation), CP insertion (CP removal), and digital beamforming. The RU 220 may be referred to as 'an access unit (AU)', 'an access point (AP)', 'a transmission/reception point (TRP)', 'a remote radio head (RRH)', 'a radio unit (RU)', or another term having an equivalent technical meaning. According to an embodiment, in a case that the RU 220 conforms to the O-RAN standard, the RU 220 may be referred to as an O-RU. The RU 220 may be replaced with and represented as a second network entity for the base station (e.g., gNB) in embodiments of the present disclosure as necessary.

In FIG. 2, the base station 110 is described as including the DU 210 and the RU 220, but embodiments of the present disclosure are not limited thereto. The base station according to embodiments may be implemented as a distributed deployment according to a centralized unit (CU) configured to perform functions of upper layers (e.g., a packet data convergence protocol (PDCP), or a radio resource control (RRC)) of an access network and a distributed unit (DU) configured to perform functions of lower layers. As an example, the digital unit (DU) 210 may be implemented by being separated into the CU and the DU. Between the core network (e.g., a 5G core (5GC) or a next generation core (NGC)) and a radio network (RAN), the base station may be implemented in a structure in which the CU, the DU, and the RU are disposed in order. An interface between the CU and the distributed unit (DU) may be referred to as an F1 interface.

The centralized unit (CU) may be responsible for functions of higher layers than the DU by being connected to one or more DUs. For example, the CU may be responsible for functions of a radio resource control (RRC) layer and a packet data convergence protocol (PDCP) layer, and the DU and the RU may be responsible for functions of lower layers. The DU may perform a portion of functions (high PHY) of the radio link control (RLC) layer, the media access control (MAC) layer, and the physical (PHY) layer, and the RU may be responsible for remaining functions (low PHY) of the PHY layer. In addition, as an example, the digital unit (DU) may be included in the distributed unit (DU) according to a distributed deployment implementation of the base station. Hereinafter, unless otherwise defined, operations of a digital unit (DU) and an RU are described, but various embodiments of the present disclosure may be applied to both a base station deployment including the CU or a deployment in which the DU is directly connected to the core network (i.e., the CU and the DU are implemented by being integrated into a base station (e.g., an NG-RAN node) that is one entity).

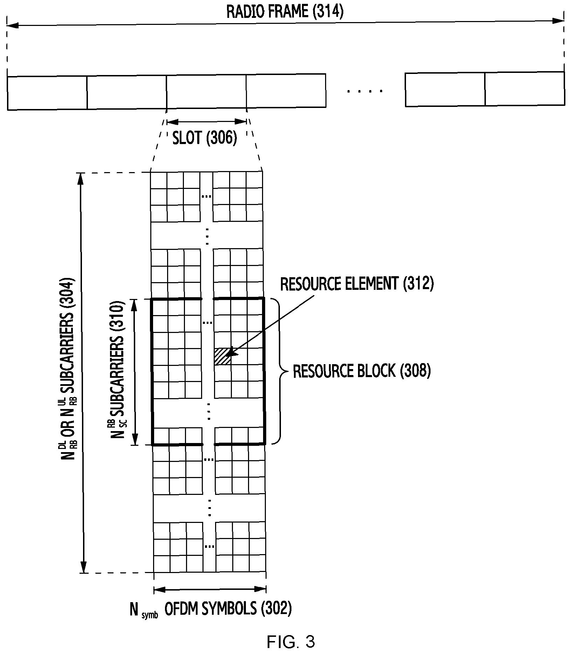

FIG. 3 illustrates an example of a resource structure in a time domain and a frequency domain. An example of a resource structure in a time domain and a frequency domain is illustrated. FIG. 3 illustrates a basic structure of a time-frequency domain, which is a radio resource domain in which data or a control channel is transmitted in downlink or uplink.

Referring to FIG. 3, a horizontal axis indicates the time domain and a vertical axis indicates the frequency domain. A minimum transmission unit in the time domain is an orthogonal frequency division multiplexing (OFDM) symbol, and N_{symb} OFDM symbols 302 are gathered to form one slot 306. A length of the subframe is defined as 1.0 ms, and a length of a radio frame 314 is defined as 10 ms. A minimum transmission unit in the frequency domain is a subcarrier, and a carrier bandwidth configuring a resource grid may be configured with N_{BW} subcarriers 304.

A basic unit of a resource in the time-frequency domain is a resource element (hereinafter referred to as 'RE') 312, and may be indicated as an OFDM symbol index and a subcarrier index. A resource block may include a plurality of resource elements. In an LTE system, a resource block (RB) (or a physical resource block, hereinafter 'PRB') is defined as N_{symb} consecutive OFDM symbols in the time domain and N_{SC}^{RB} consecutive subcarriers in the frequency domain. In an NR system, a resource block (RB) 308 may be defined as N_{SC}^{RB} consecutive subcarriers 310 in the frequency domain. One RB 308 includes N_{SC}^{RB} REs 312 on a frequency axis. In general, a minimum unit of transmission of data is RB and the number of subcarriers is N_{SC}^{RB}=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

**[Table 1]**

| Channel bandwidth [MHz] | SCS | 5 | 10 | 20 | 50 | 80 | 100 |
|---|---|---|---|---|---|---|---|
| Trans mission bandwidth configuration NRB | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

**[Table 2]**

| Channel bandwidth [MHz] | SCS | 50 | 100 | 200 | 400 |
|---|---|---|---|---|---|
| Trans mission bandwidth | 60kHz | 66 | 132 | 264 | N/A |
| | 120kHz | 32 | 66 | 132 | 264 |
| configuration N_{RB} | | | | | |

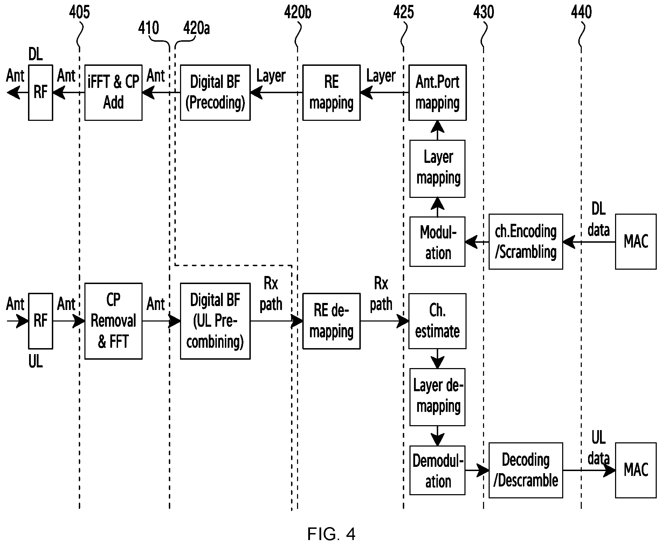

FIG. 4 illustrates an example of a function split of network entities. As a wireless communication technology develops (e.g., introduction of a 5th generation (5G) communication system (or a new radio (NR) communication system)), a frequency band in use has further increased. As a cell radius of a base station becomes very small, the number of RUs required to be installed has further increased. In addition, in a 5G communication system, an amount of data to be transmitted has increased by up to 10 times or more, and a transmission capacity of a wired network transmitted to a fronthaul has greatly increased. Due to the above-described factors, installation cost of the wired network in the 5G communication system may greatly increase. Accordingly, in order to reduce the transmission capacity of the wired network and reduce the installation cost of the wired network, a function split in which a portion of functions of a modem of a DU are transferred to an RU to reduce a transmission capacity of a fronthaul may be used. Hereinafter, although described as the RU, the function split described later may be equally applied not only to the RU but also to a relationship between an MMU and the DU.

In order to reduce a burden of the DU, a role of the RU that is responsible for only an existing RF function may be extended to a portion of functions of a physical layer. As the RU performs functions of higher layers, a throughput of the RU increases so that a transmission bandwidth in the fronthaul increases and, at the same time, a constraint on a latency requirement due to response processing may be lowered. On the other hand, as the RU performs functions of higher layers, a virtualization gain is reduced, and a size, a weight, and a cost of the RU increase. Considering a trade-off between the above-described advantages and disadvantages, it is required to implement an optimal function split.

Referring to FIG. 4, function splits in the physical layer below a MAC layer are illustrated. In a case of a downlink (DL) in which a signal is transmitted to a terminal through a radio network, the base station may sequentially perform channel encoding/scrambling, modulation, layer mapping, antenna mapping, RE mapping, digital beamforming (e.g., precoding), iFFT transformation/CP insertion, and RF transformation. In a case of an uplink (UL) in which a signal is received from the terminal through the radio network, the base station may sequentially perform RF transformation, FFT transformation/CP removal, digital beamforming (pre-combining), RE demapping, channel estimation, layer demapping, demodulation, and decoding/descrambling. A split for uplink functions and downlink functions may be defined in various types by necessity, a discussion in a standard, and the like between vendors, according to the above-described trade-off.

In a first function split 405, the RU performs an RF function, and a DU performs a PHY function. The first function split is that the PHY function in the RU is not implemented, and, as an example, may be referred to as Option 8. In a second function split 410, the RU performs the iFFT transformation/CP insertion in the DL of the PHY function and the FFT transformation/CP removal in the UL, and the DU performs remaining PHY functions. As an example, the second function split 410 may be referred to as Option 7-1. In a third function split 420a, the RU performs the iFFT transformation/CP insertion in the DL of the PHY function and the FFT transformation/CP removal and the digital beamforming in the UL, and the DU performs remaining PHY functions. As an example, the third function split 420a may be referred to as Option 7-2x Category A. In a fourth function split 420b, the RU performs up to the digital beamforming in both the DL and the UL, and the DU performs upper PHY functions after the digital beamforming. As an example, the fourth function split 420b may be referred to as Option 7-2x Category B. In a fifth function split 425, the RU performs up to the RE mapping (or the RE demapping) in both the DL and the UL, and the DU performs upper PHY functions after the RE mapping (or the RE demapping). As an example, the fifth function split 425 may be referred to as Option 7-2. In a sixth function split 430, the RU performs up to the modulation (or the demodulation) in both the DL and the UL, and the DU performs upper PHY functions after the modulation (or the demodulation). As an example, the sixth function split 430 may be referred to as Option 7-3. In a seventh function split 440, the RU performs up to the encoding/scrambling (or the decoding/descrambling) in both the DL and the UL, and the DU performs upper PHY functions after the modulation (or the demodulation). As an example, the seventh function split 440 may be referred to as Option 6.

According to an embodiment, in a case that large-capacity signal processing is expected such as an FR 1 MMU, a function split (e.g., the fourth function split 420b) at a relatively higher layer may be required in order to reduce a fronthaul capacity. In addition, a function split (e.g., the sixth function split 430) at a too high layer may make a control interface complicated, and may include a plurality of PHY processing blocks in the RU, thereby causing a burden in implementation of the RU, and therefore an appropriate function split may be required according to a deployment and an implementation method of the DU and the RU.

According to an embodiment, in a case that precoding of the data received from the DU cannot be processed (i.e., in a case that a capability of the precoding of the RU has a limitation), the third function split 420a or a function split (e.g., the second function split 410) equal to or lower than the third function split 420a may be applied. Conversely, in a case that there is a capability to process the precoding of the data received from the DU, the fourth function split 420b or a function split (e.g., the sixth function split 430) equal to or higher than the fourth function split 420b may be applied.

In an O-RAN standard, a type of an O-RU is distinguished according to whether a precoding function is located in an interface of an O-DU or is located in an interface of the O-RU. For example, the RU may perform operations according to a function split of the third function split 420a (which may be referred to as category A (CAT-A)) for performing beamforming processing or the fourth function split 420b (which may be referred to as category B (CAT-B)). In other words, the O-RU in which the precoding is not performed (i.e., complexity is low) may be referred to as a CAT-A O-RU. The O-RU in which the precoding is performed may be referred to as a CAT-B O-RU. In addition, for example, channel estimation may be also performed in the O-RU instead of the O-DU. For improving an uplink performance, the O-RU may operate according to the sixth function split 430 (Option 7-3).

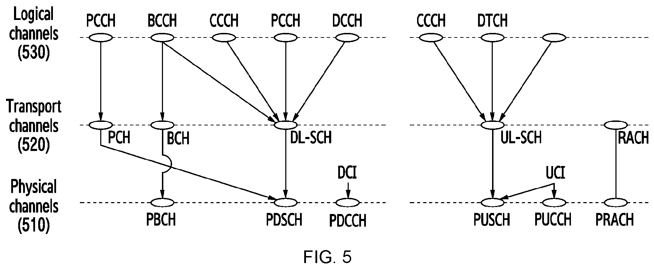

Hereinafter, an upper-PHY refers to physical layer processing processed in the DU of a fronthaul interface. For example, the upper-PHY may include FEC encoding/decoding, scrambling, and modulation/demodulation. Hereinafter, a lower-PHY refers to physical layer processing processed in the RU of the fronthaul interface. For example, the lower-PHY may include FFT/iFFT, digital beamforming, and physical random access channel (PRACH) extraction and filtering. However, the above-described criteria do not exclude embodiments through other function splits. A functional configuration, signaling, or an operation of FIG. 5 to FIG. 14B described later may be applied not only to the third function split 420a and the fourth function split 420b but also to another function split (e.g., the sixth function split 430). In addition, for example, the channel estimation may be also performed in the O-RU instead of the O-DU. For improving the uplink performance, the O-RU may operate according to the sixth function split 430 (Option 7-3).

FIG. 5 illustrates an example of channels in a communication standard.

Referring to FIG. 5, the channels may include a physical channel 510, a transport channel 520, and a logical channel 530 according to layers defined in the communication standard. The physical channel 510 may provide functions (e.g., channel coding, HARQ processing, modulation, multi-antenna processing, and resource mapping) that are necessary to generate physical signals in a physical layer. In the physical layer, the physical signals are modulated in an OFDM scheme and may be transmitted in a wireless environment via a time-frequency resource (e.g., the resource of the resource grid of FIG. 3).

In downlink transmission, the physical channel 510 may include at least one of a physical broadcast channel (PBCH), a physical downlink shared channel (PDSCH), or a physical downlink control channel (PDCCH). The PDCCH may be used to carry downlink control information (DCI). In general, downlink data may refer to symbols transmitted through the PDSCH, and a downlink control signal may refer to symbols transmitted through the PDCCH. In addition, in a downlink, an SS/PBCH block including a synchronization signal (e.g., a primary synchronization signal (PSS), or a secondary synchronization signal (SSS)) for synchronization and a broadcast signal (e.g., PBCH) may be transmitted in addition to channels illustrated in FIG. 4. In addition, in the downlink, a channel state information-reference signal (CSI-RS) for obtaining measurement or channel information, a demodulation reference signal (DMRS) for channel estimation and demodulation, and a phase tracking reference signal (PTRS) may be transmitted.

In uplink transmission, the physical channel 510 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may refer to symbols transmitted through the PUSCH, and an uplink control signal may refer to symbols corresponding to the UCI. For example, the UCI may include at least one of a scheduling request (SR), a hybrid automatic request (HARQ)-acknowledge (ACK) bit(s), or channel state information (CSI). In addition, in uplink, the DMRS for channel estimation and demodulation, and the PTRS may be transmitted in the downlink for the channel estimation, in addition to the channels illustrated in FIG. 4.

The transport channel 520 may connect a physical layer and a medium access channel (MAC) layer located at a higher level of the physical layer, and may be classified according to how data is transmitted through a wireless interface. In the downlink, the transport channel 520 may include at least one of a paging channel (PCH) for paging, a broadcast channel (BCH) for broadcasting system information, and a downlink shared channel (DL-SCH) transmission of downlink data. In the uplink, the transport channel 520 may include at least one of a random access channel (RACH) for transmission of a random access preamble or an uplink shared channel (UL-SCH) for transmission of downlink data.

The logical channel 530 is located above the transport channel and is mapped to the transport channel 520. The logical channel 530 may be classified into a control channel for transmitting control area information and a traffic channel for transmitting user area information. The control channel of the logical channel 530 may include at least one of a paging control channel (PCCH), a broadcast control channel (BCCH), a common control channel (CCCH), or a dedicated control channel (DCCH). The traffic channel of the logical channel 530 may include a dedicated traffic channel (DTCH).

In describing embodiments of the present disclosure, 'data' may mean sequences other than a reference signal. For example, 'data' obtained by a receiver in uplink communication may mean signals transmitted through the PUSCH. However, the PUSCH is an example, and it is certain that the embodiments of the present disclosure may be applied to other channels (e.g., PDSCH, PBCH, PDCCH, and PUCCH) that require channel estimation.

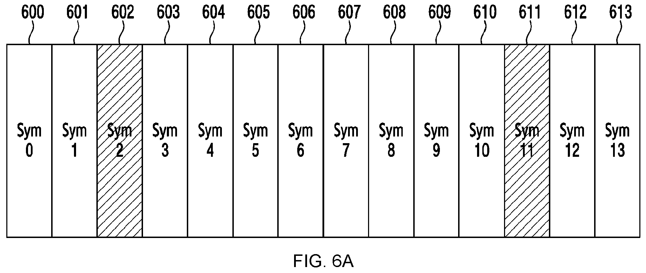

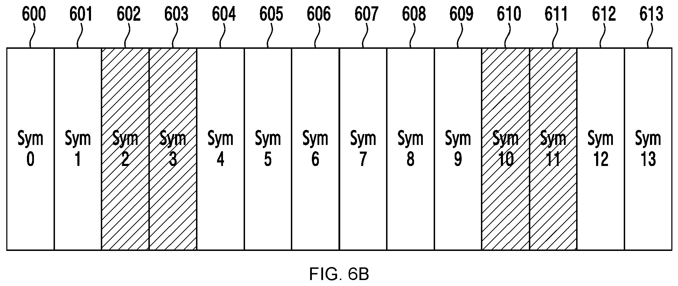

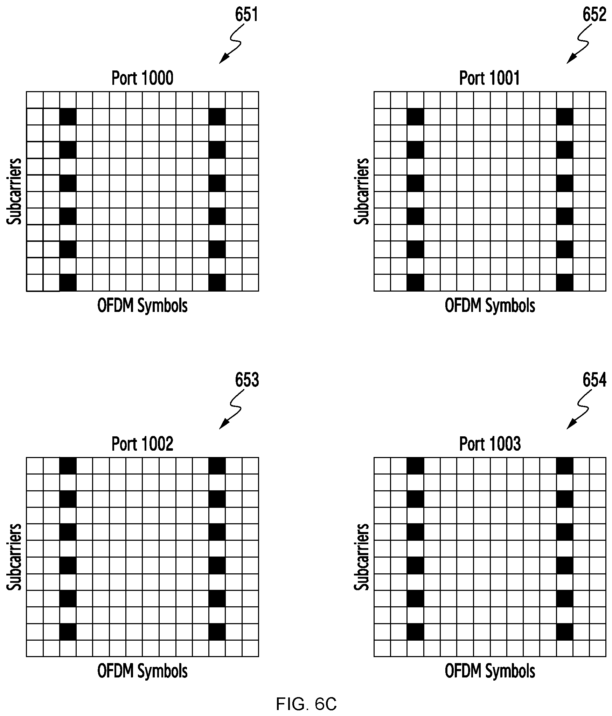

FIG. 6A, FIG. 6B, and FIG. 6C illustrate an example of reference signals (RSs) in a slot. The reference signals may be used for channel estimation. For example, for coherent demodulation with data (e.g., a PDSCH and a PUSCH), a demodulation reference signal (DMRS) may be used. Hereinafter, channel estimation using a DMRS is exemplified, but embodiments of the present disclosure described below may also be applied to channel estimation using sounding reference signals (SRSs). Hereinafter, in order to describe channel estimation of the present disclosure and operations using a DMRS for channel estimation, uplink transmission of an NR communication system is described as an example. However, embodiments of the present disclosure are not limited to an uplink of the NR communication system. It is of course that embodiments of the present disclosure may also be applied in downlink or another communication system.

Referring to FIG. 6A, an electronic device (e.g., a base station 110 or a DU 210) may receive uplink signals from a terminal (e.g., a terminal 120) on a slot (e.g., a slot 306). Hereinafter, an operation between the base station 110 and the terminal 120 is exemplified. The terminal 120 may transmit uplink signals to the base station 110 on the slot. The slot may include 14 symbols (e.g., a symbol #0 600, a symbol #1 601, a symbol #2 602, a symbol #3 603, a symbol #4 604, a symbol #5 605, a symbol #6 606, a symbol #7 607, a symbol #8 608, a symbol #9 609, a symbol #10 610, a symbol #11 611, a symbol #12 612, and a symbol #13 613). At least some symbols among the 14 symbols may be used to carry DMRS sequences. A symbol carrying the DMRS sequences may be referred to as an RS symbol. Among symbols in the slot, a symbol excluding the RS symbol, which is a region to which uplink data may be mapped, may be referred to as a data symbol.

The received uplink signals may include data (hereinafter, received data) received on an uplink channel (e.g., a PUSCH). The received data may be transmitted in data symbols of a time domain. In addition, the received uplink signals may include reference signals (hereinafter, received reference signals) (e.g., a DMRS) for channel estimation and coherent demodulation of the data symbols. The received reference signals may be transmitted in RS symbols of a time domain. For example, the RS symbols may include the symbol #2 602 and the symbol #11 611. The base station 110 (e.g., the DU 210) may estimate a channel between the base station 110 (e.g., an RU 220) and the terminal 120 through the received reference signals. The base station 110 may obtain information on a channel experienced by the received reference signals. For example, the base station 110 may obtain information on a channel experienced by the received data through a relationship between a position to which the RS symbols of the received reference signals are mapped and a position to which the data symbols of the received data are mapped. As an example, the base station 110 may obtain information on the channel experienced by the received data by performing interpolation (or extrapolation) in a frequency domain or interpolation (or extrapolation) in a time domain based on information on the channel experienced by the received reference signals. The base station 110 may estimate a channel at each resource element in a time-frequency resource by using uplink reference signals (e.g., a DMRS and an SRS).

In FIG. 6A, an example in which channel estimation is performed by using two RS symbols (e.g., the symbol #2 602 and the symbol #11 611) in one slot has been described, but embodiments of the present disclosure are not limited thereto. Mapping of RS symbols used for channel estimation may vary in accordance with a DMRS configuration. For example, the greater number of RS symbols than two RS symbols may be mapped in one slot, or only one RS symbol may be mapped in one slot.

Referring to FIG. 6B, the slot may include 14 symbols (e.g., the symbol #0 600, the symbol #1 601, the symbol #2 602, the symbol #3 603, the symbol #4 604, the symbol #5 605, the symbol #6 606, the symbol #7 607, the symbol #8 608, the symbol #9 609, the symbol #10 610, the symbol #11 611, the symbol #12 612, and the symbol #13 613). The RS symbols may include the symbol #2 602, the symbol #3 603, the symbol #10 610, and the symbol #11 611 among the 14 symbols. In this way, a position and the number of RS symbols to which uplink RSs are mapped in a slot may be various.

An electronic device (e.g., the base station 110 or the DU 210) may transmit an RS configuration to a terminal (e.g., the terminal 120) through higher layer signaling (e.g., RRC signaling). Hereinafter, an operation between the base station 110 and the terminal 120 is exemplified. The terminal 120 may transmit uplink signals based on parameters in the RS configuration received from the base station 110. For example, the RS configuration may include a DMRS configuration for a PUSCH. The RS configuration may include at least one of information on a DMRS configuration type (e.g., a frequency resource corresponding to a corresponding antenna port may vary in accordance with whether a DMRS configuration type is a type 1 or a type 2), information on a DMRS mapping type (e.g., a position of an RS symbol may vary in accordance with whether a PUSCH mapping type is a Type A (indexing from a start symbol (e.g., the symbol #0 600) of a slot) or a Type B (indexing from a region to which a PUSCH is allocated in a slot)), information on a position of symbols to which a DMRS is mapped (e.g., the number and a position of RS symbols mapped in a slot may be determined in accordance with a DMRS additional position IE), and/or information on a length of consecutive symbols to which a DMRS is mapped (e.g., indicating whether a length of consecutively mapped symbols is 1 (i.e., a single symbol) or 2 (i.e., a double symbol)).

The terminal 120 may transmit uplink signals through a plurality of antennas based on the parameters. For example, each antenna may correspond to an antenna port for uplink DMRSs (e.g., one of 1000, 1001, 1002, 1003, 1004, 1005, 1006, and 1007, which are DMRS antenna ports). The terminal 120 may map an RS sequence to a resource position (e.g., an RE) of an RS symbol specified in accordance with an antenna. The RS sequence may be dependent on a position of a mapping resource and/or an antenna port. For example, the terminal 120 may transmit DMRSs for a PUSCH through four antennas. The four antennas may respectively correspond to the antenna port 1000, the antenna port 1001, the antenna port 1002, and the antenna port 1003. Referring to FIG. 6C, a first grid 651 indicates RE mapping of DMRSs transmitted through an antenna corresponding to the antenna port 1000. The number of DMRS symbols in a slot is two, and DMRS sequences may be mapped to REs of a 3rd symbol and a 12th symbol in the slot. A second grid 652 indicates RE mapping of DMRSs transmitted through an antenna corresponding to the antenna port 1001. A third grid 653 indicates RE mapping of DMRSs transmitted through an antenna corresponding to the antenna port 1002. A fourth grid 654 indicates RE mapping of DMRSs transmitted through an antenna corresponding to the antenna port 1003.

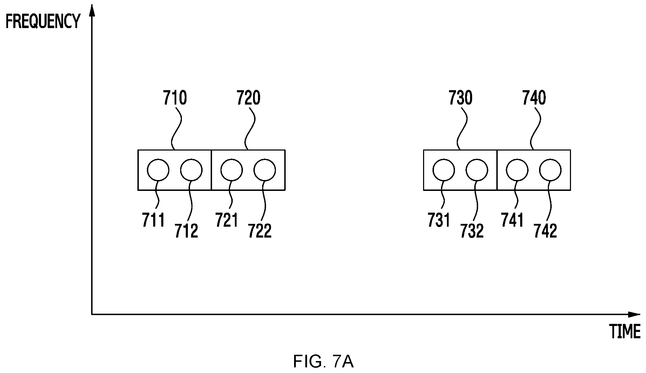

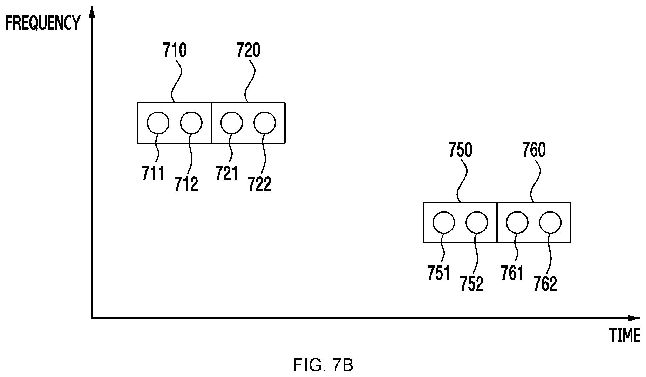

FIG. 7A and FIG. 7B illustrate examples of slot aggregation. The slot aggregation indicates a technique of allocating data (e.g., a PUSCH and a PDSCH) to consecutive slots in order to increase decoding performance in a weak electric field in a communication system (e.g., LTE or NR). Hereinafter, in the present disclosure, as an example of slot aggregation, PUSCH transmission across a plurality of slots is exemplarily described, but it is of course that embodiments of the present disclosure may be applied not only to uplink but also to downlink. Hereinafter, in order to explain a relationship between slot aggregation and an RS symbol, a situation in which two RS symbols are mapped to one slot is described.

Referring to FIG. 7A, a horizontal axis indicates time and a vertical axis indicates frequency. An electronic device (e.g., a base station 110 or a DU 210) may allocate slots consecutively in the same frequency region (e.g., the same RB) for slot aggregation of a PUSCH. For example, the electronic device may transmit, to a terminal 120, a PUSCH configuration in which an aggregation factor is set to 2. A terminal (e.g., the terminal 120) may transmit uplink signals in a first slot 710 and a second slot 720. The first slot 710 may include a first RS symbol 711 and a second RS symbol 712. The second slot 720 may include a first RS symbol 721 and a second RS symbol 722. Thereafter, in a case of performing retransmission, the terminal 120 may transmit uplink signals corresponding to the retransmission in a third slot 730 and a fourth slot 740. The third slot 730 may include a first RS symbol 731 and a second RS symbol 732. The fourth slot 740 may include a first RS symbol 741 and a second RS symbol 742. The terminal 120 may transmit uplink signals corresponding to the retransmission in the same frequency region as initial transmission (e.g., PUSCH transmission in the first slot 710 and the second slot 720).

Referring to FIG. 7B, a horizontal axis indicates time and a vertical axis indicates frequency. An electronic device (e.g., the base station 110 or the DU 210) may allocate slots consecutively in the same frequency region (e.g., the same RB) for slot aggregation of a PUSCH. For example, the electronic device may transmit, to the terminal 120, a PUSCH configuration in which an aggregation factor is set to 2. A terminal (e.g., the terminal 120) may transmit uplink signals in a first slot 710 and a second slot 720. The first slot 710 may include a first RS symbol 711 and a second RS symbol 712. The second slot 720 may include a first RS symbol 721 and a second RS symbol 722. Thereafter, when retransmitting, the terminal 120 may change a frequency region. The terminal 120 may transmit uplink signals corresponding to the retransmission in a frequency region different from initial transmission (e.g., PUSCH transmission in the first slot 710 and the second slot 720). The terminal 120 may transmit uplink signals corresponding to the retransmission in a third slot 730 and a fourth slot 740. The third slot 730 may include a first RS symbol 731 and a second RS symbol 732. The fourth slot 740 may include a first RS symbol 741 and a second RS symbol 742.

Frequency regions corresponding to a plurality of slots of slot aggregation may be the same frequency region or may be different frequency regions in accordance with a setting of a network. In order to obtain frequency diversity, slots of slot aggregation may be allocated across different frequency regions. On the other hand, if slots of slot aggregation are allocated in the same frequency region, a base station receiving uplink signals may obtain a more improved channel estimation result through reference signals transmitted on the slots. Hereinafter, in the present disclosure, in order to obtain high channel estimation performance in a weak electric field, a channel estimation technique for data transmitted across slots in accordance with slot aggregation in the same frequency region is described.

As described above, a method of estimating a channel by considering all RS symbols transmitted across multiple slots within the same frequency region may provide performance improvement in a weak electric field. However, in an environment in which Doppler is large (e.g., a high-speed moving environment), as a channel estimation result across slots is accumulated, a signal distortion phenomenon occurs, and thus accuracy of a channel estimation result may rather decrease. Therefore, an accumulated channel estimation result of slots allocated to the same frequency region should be used as much as possible in an environment in which a Doppler frequency is low (e.g., an environment in which moving speed is low), and an instantaneous channel estimation value within a single slot should be used in an environment in which a Doppler frequency is high (e.g., an environment in which moving speed is high).

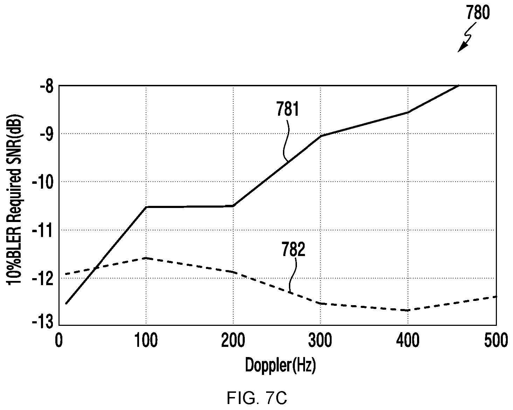

FIG. 7C illustrates an example of channel estimation performance in accordance with a Doppler frequency.

Referring to FIG. 7C, a graph 780 indicates communication quality in accordance with a Doppler frequency. A horizontal axis of the graph 780 indicates a Doppler frequency (unit: hertz (Hz)), and a vertical axis indicates an SNR (unit: decibel (dB)) required to satisfy a BLER of 10% or less. A first line 781 indicates an SNR when using a channel estimation result of 8 slots, and a second line 782 indicates an SNR when using a channel estimation result of 1 slot. For example, at a Doppler frequency of less than about 10 Hz, the first line 781 indicates a higher communication SNR than the second line 782. At a Doppler frequency of about 100 Hz or more, the second line 782 indicates that a higher SNR is required than the second line 781. In other words, it may be identified that using a channel estimation result for a single slot requires relatively less SNR than using a channel estimation result for a plurality of slots as the Doppler frequency increases. Relatively less SNR being required may indicate that channel estimation performance is higher.

Hereinafter, in consideration of matters mentioned in FIG. 7A to FIG. 7C, the present disclosure proposes a technique of adaptively determining which method of performing channel estimation is more advantageous and performing channel estimation in accordance with the determined method, in a situation in which signals are repeatedly transmitted across a plurality of slots (e.g., slot aggregation, repetition of signal transmissions for a type of terminal such as an MTC terminal or an NB-IoT terminal, and a situation in which slots are consecutively allocated). Exemplarily, an electronic device (e.g., the base station 110, the DU 210, or the terminal 120) may adaptively determine a channel estimation method by comparing an estimation metric in accordance with a channel estimation result for at least two slots among a plurality of slots for repetitive transmission (e.g., a plurality of slots configured with slot aggregation) and an estimation metric in accordance with a channel estimation result for a single slot, and may demodulate data symbols in accordance with the determined channel estimation method.

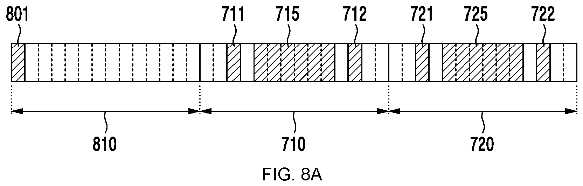

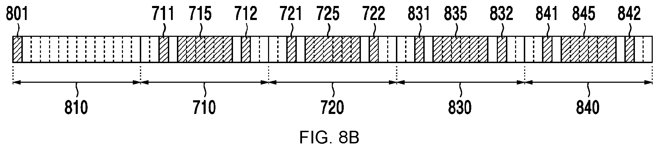

FIG. 8A and FIG. 8B illustrate examples of slots of slot aggregation. Repetitive transmission of PUSCHs may be performed on the slots.

Referring to FIG. 8A, an electronic device (e.g., a base station 110 or a DU 210) may transmit DCI 801 to a terminal (e.g., a terminal 120) on a slot 810. The DCI 801 may indicate uplink resource allocation. The DCI 801 may indicate resource allocation for uplink data (e.g., a PUSCH) in a time domain and resource allocation for uplink data in a frequency domain. For example, the DCI 801 may be transmitted in accordance with DCI format 0_0, DCI format 0_1, or DCI format 0_2. The electronic device may transmit, to the terminal 120 through RRC signaling, a PUSCH configuration including an aggregation factor. Repetitive PUSCH transmissions may be allocated to the terminal 120 through the DCI 801. The PUSCH transmissions may be repeatedly allocated by the number in accordance with the aggregation factor. For example, the aggregation factor may be set to '2'. The terminal 120 may identify an uplink resource scheduled from the DCI 801. The terminal 120 may identify a first slot 710 and a second slot 720. The terminal 120 may repeatedly transmit uplink data (e.g., PUSCH) to the electronic device across the first slot 710 and the second slot 720. The first slot 710 may include a first RS symbol 711 and a second RS symbol 712. The first slot 710 may include a PUSCH region 715. Uplink data may be mapped to the PUSCH region 715. The second slot 720 may include a first RS symbol 721 and a second RS symbol 722. The second slot 720 may include a PUSCH region 725. Uplink data may be mapped to the PUSCH region 725. As a non-limiting example, the uplink data in the PUSCH region 725 may correspond to the same transport block (TB) as the uplink data in the PUSCH region 715, and may have a different redundancy version (RV). As an example, the uplink data in the PUSCH region 715 may correspond to RV0. The uplink data in the PUSCH region 725 may correspond to RV 2.

Referring to FIG. 8B, an electronic device (e.g., the base station 110 or the DU 210) may transmit DCI 801 to a terminal (e.g., the terminal 120) on a slot 810. The DCI 801 may indicate uplink resource allocation. Unlike FIG. 8A, the electronic device may transmit, to the terminal 120 through RRC signaling, a PUSCH configuration including an aggregation factor set to '4'. The terminal 120 may identify a plurality of slots in accordance with slot aggregation. The plurality of slots may be consecutive in a time domain. As the aggregation factor is set to '4', the terminal 120 may identify four slots. For example, the terminal 120 may identify a first slot 710, a second slot 720, a third slot 830, and a fourth slot 840. The terminal 120 may repeatedly transmit uplink data to the electronic device across the plurality of slots. The first slot 710 may include a first RS symbol 711 and a second RS symbol 712. The first slot 710 may include a PUSCH region 715 corresponding to uplink data. The second slot 720 may include a first RS symbol 721 and a second RS symbol 722. The second slot 720 may include a PUSCH region 725 corresponding to uplink data. The third slot 830 may include a first RS symbol 831 and a second RS symbol 832. The third slot 830 may include a PUSCH region 835 corresponding to uplink data. The fourth slot 840 may include a first RS symbol 841 and a second RS symbol 842. The fourth slot 840 may include a PUSCH region 845 corresponding to uplink data. As a non-limiting example, uplink data in each PUSCH region may correspond to the same TB, and may have a different RV. As an example, the uplink data in the PUSCH region 715 may correspond to RV0. The uplink data in the PUSCH region 725 may correspond to RV 2. The uplink data in the PUSCH region 835 may correspond to RV 3. The uplink data in the PUSCH region 845 may correspond to RV 1.

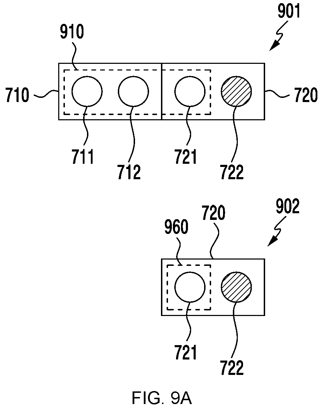

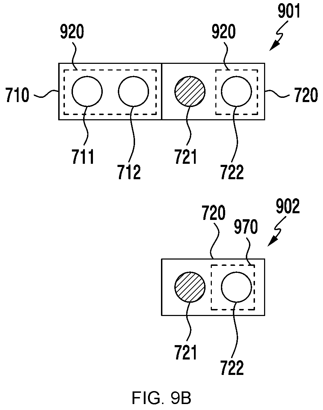

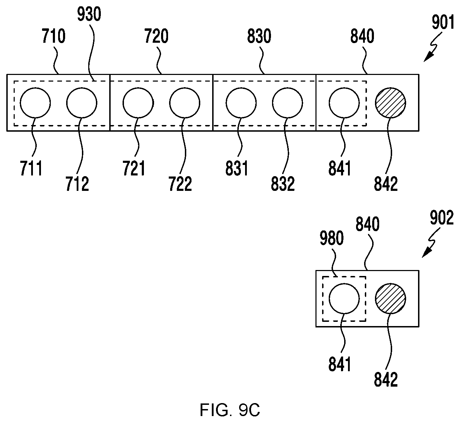

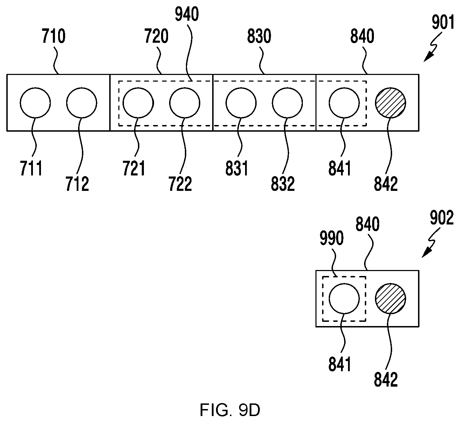

FIG. 9A, FIG. 9B, FIG. 9C, and FIG. 9D illustrate examples of a comparison between channel estimation using at least two slots (hereinafter, a first method) and channel estimation using one slot (hereinafter, a second method). An electronic device (e.g., a base station 110 or a DU 210) may receive RSs. The electronic device may estimate a channel experienced by the RSs, and may demodulate data signals by using a result of the estimation. In estimating the channel experienced by the RSs, the electronic device may adaptively select one of various methods. For example, the electronic device may adaptively select one of a first method 901 using a channel estimation result accumulated across a plurality of slots and a second method 902 using a channel estimation result in one slot. A purpose of comparison between the first method 901 and the second method 902 may be to compensate for an effect that may be distorted due to Doppler in channel estimation.

Referring to FIG. 9A, an electronic device (e.g., the base station 110 or the DU 210) may receive uplink data on a plurality of slots in accordance with slot aggregation. The plurality of slots may include a first slot 710 and a second slot 720. RSs for demodulation of the uplink data may be mapped on RS symbols. The first slot 710 may include a first RS symbol 711 and a second RS symbol 712. The second slot 720 may include a first RS symbol 721 and a second RS symbol 722.

The electronic device may receive uplink RSs in the second RS symbol 722. For example, the uplink RSs may be a DMRS for a PUSCH. The electronic device may perform channel estimation for the second slot 720 through the uplink RSs. The electronic device may obtain a channel estimation result for the uplink RSs for demodulation of uplink data in the second slot 720. In order to determine a channel method for the uplink RSs, the electronic device may use both an estimation metric in accordance with the first method 901 (hereinafter, a first estimation metric) and an estimation metric in accordance with the second method 902 (hereinafter, a second estimation metric). Hereinafter, a symbol to which the uplink RSs are mapped (e.g., the second RS symbol 722) may be referred to as an estimation RS symbol, a target RS symbol, and/or a technical term equivalent thereto in terms of being a target for current channel estimation.

In the first method 901, the electronic device may determine, among RS symbols mapped to the first slot 710 and the second slot 720, a set 910 of RS symbols different from an estimation RS symbol (e.g., the second symbol 722). The set 910 of RS symbols may include the first RS symbol 711 of the first slot 710, the second RS symbol 712 of the first slot 710, and the first RS symbol 721 of the second slot 720. The electronic device may obtain a channel estimation result for the set 910 of RS symbols (hereinafter, a first channel estimation result). The electronic device may obtain one first channel estimation result by using all channel estimation results of RS symbols of the set 910 of RS symbols. The channel estimation results of the RS symbols of the set 910 of RS symbols may be accumulated. For example, the electronic device may obtain the first channel estimation result through an operation (e.g., an average or an effective value) on the channel estimation results of the RS symbols of the set 910 of RS symbols. An RS symbol used for the first channel estimation result (e.g., an RS symbol of the set 910 of RS symbols) may be referred to as an accumulated RS symbol in terms of providing an accumulated channel estimation result.

In the second method 902, the electronic device may determine an RS symbol sample 960 in order to identify an instantaneous channel state. The electronic device may determine, as the RS symbol sample 960, the first RS symbol 721 adjacent to an estimation RS symbol (e.g., the second RS symbol 722) among the RS symbols of the set 910 of RS symbols as the RS symbol sample 960. The electronic device may obtain a channel estimation result for the second RS symbol 722 corresponding to the RS symbol sample 960 (hereinafter, a second channel estimation result). An RS symbol used for the second channel estimation result (e.g., an RS symbol corresponding to the RS symbol sample 960) may be referred to as a sample RS symbol in terms of being selected among symbols different from the estimation RS symbol, or may be referred to as an adjacent RS symbol in terms of being a symbol adjacent to the estimation RS symbol.

Referring to FIG. 9B, in the first method 901, an example of using accumulated RS symbols different from those in FIG. 9A is described. For example, an estimation RS symbol may be the first symbol 721. The electronic device may determine, among RS symbols mapped to a first slot 710 and a second slot 720, a set 920 of RS symbols different from the estimation RS symbol (e.g., the first symbol 721). The set 920 of RS symbols may include a first RS symbol 711 of the first slot 710, a second RS symbol 712 of the first slot 710, and a second RS symbol 722 of the second slot 720. The electronic device may obtain a channel estimation result for the set 920 of RS symbols (hereinafter, a first channel estimation result). The electronic device may obtain one first channel estimation result by using all channel estimation results of RS symbols of the set 920 of RS symbols. The channel estimation results of the RS symbols of the set 920 of RS symbols may be accumulated. In the second method 902, the electronic device may determine an RS symbol sample 970 in order to identify an instantaneous channel state. The electronic device may determine, as the RS symbol sample 970, the second RS symbol 722 adjacent to the estimation RS symbol (e.g., the first RS symbol 721) among the RS symbols of the set 910 of RS symbols as the RS symbol sample 970. According to an embodiment, the electronic device may determine the sample 970 among symbols included in an estimation slot of the estimation RS symbol. In other words, a symbol for obtaining a second channel estimation result may be included in the same slot as the estimation RS symbol. The electronic device may obtain a channel estimation result for the second RS symbol 722 corresponding to the RS symbol sample 970 (hereinafter, the second channel estimation result).

Referring to FIG. 9C, in the first method 901, an example of using accumulated RS symbols different from those in FIG. 9A and FIG. 9B is described. For example, an estimation RS symbol may be a second symbol 842 of a fourth slot 840. The electronic device may determine, among RS symbols mapped to a first slot 710, a second slot 720, a third slot 830, and a fourth slot 840, a set 930 of RS symbols different from the estimation RS symbol (e.g., the second symbol 842). The set 930 of RS symbols may include a first RS symbol 711 of the first slot 710, a second RS symbol 712 of the first slot 710, a first RS symbol 721 of the second slot 720, a second RS symbol 722 of the second slot 720, a first RS symbol 831 of the third slot 830, a second RS symbol 832 of the third slot 830, and a first RS symbol 841 of the fourth slot 840. The electronic device may obtain a channel estimation result for the set 930 of RS symbols (hereinafter, a first channel estimation result). The electronic device may obtain one first channel estimation result by using all channel estimation results of RS symbols of the set 930 of RS symbols. The channel estimation results of the RS symbols of the set 930 of RS symbols may be accumulated. In the second method 902, the electronic device may determine an RS symbol sample 980 in order to identify an instantaneous channel state. The electronic device may determine, as the RS symbol sample 980, the first RS symbol 841 adjacent to the estimation RS symbol (e.g., the second RS symbol 842) among the RS symbols of the set 930 of RS symbols as the RS symbol sample 980. The electronic device may obtain a channel estimation result for the first RS symbol 841 corresponding to the RS symbol sample 980 (hereinafter, a second channel estimation result).

Referring to FIG. 9D, in the first method 901, an example of using accumulated RS symbols different from those in FIG. 9A, FIG. 9B, and FIG. 9C is described. For example, an estimation RS symbol may be a second symbol 842 of a fourth slot 840. The electronic device may determine, among RS symbols mapped to a second slot 720, a third slot 830, and a fourth slot 840, a set 940 of RS symbols different from the estimation RS symbol (e.g., the second symbol 842). Even in a situation in which four slots are configured for slot aggregation, slots for obtaining a first channel estimation result may be identified by the electronic device, instead of using all slots. The set 940 of RS symbols may include a first RS symbol 721 of the second slot 720, a second RS symbol 722 of the second slot 720, a first RS symbol 831 of the third slot 830, a second RS symbol 832 of the third slot 830, and a first RS symbol 841 of the fourth slot 840. The electronic device may obtain a channel estimation result for the set 940 of RS symbols (hereinafter, a first channel estimation result). The electronic device may obtain one first channel estimation result by using all channel estimation results of RS symbols of the set 940 of RS symbols. The channel estimation results of the RS symbols of the set 940 of RS symbols may be accumulated. In the second method 902, the electronic device may determine an RS symbol sample 990 in order to identify an instantaneous channel state. The electronic device may determine, as the RS symbol sample 990, the first RS symbol 841 adjacent to the estimation RS symbol (e.g., the second RS symbol 842) among the RS symbols of the set 940 of RS symbols as the RS symbol sample 990. The electronic device may obtain a channel estimation result for the first RS symbol 841 corresponding to the RS symbol sample 990 (hereinafter, a second channel estimation result).

Comparing FIG. 9A, FIG. 9B, FIG. 9C, and FIG. 9D, even if the electronic device performs channel estimation in the same method (e.g., the method 901), it may differently configure a set of RS symbols that becomes a target thereof. According to an embodiment, among a plurality of slots in which uplink transmission is set, the electronic device may determine a set of RS symbols including all previous RS symbols based on a current estimation RS symbol. For example, the electronic device may obtain the first channel estimation result by using channel estimation results for all slots before an estimation slot of the current estimation RS symbol. According to another embodiment, the electronic device may determine a set of RS symbols including RS symbols in slots in accordance with the fixed number. For example, the electronic device may include RS symbols in previous two slots in the set of RS symbols (e.g., the set 920 of RS symbols) based on an estimation RS symbol, which is a current estimation target. For example, the electronic device may include RS symbols in a total of two slots in the set of RS symbols (e.g., the set 910 of RS symbols) by including an estimation slot of the estimation RS symbol, which is the current estimation target. For example, the electronic device may include RS symbols in a total of three slots in the set of RS symbols (e.g., the set 940 of RS symbols) by including the estimation slot of the estimation RS symbol, which is the current estimation target. According to still another embodiment, the electronic device may determine a set of RS symbols based on communication quality (e.g., RSRP, CSI, BLER). The electronic device may determine the number of accumulated slots based on the communication quality. The electronic device may identify slots by the determined number of accumulated slots. The electronic device may determine a set of RS symbols including RS symbols in the identified slots.

The electronic device may obtain a first channel estimation result ĥ*_{acc}* through the set 910 of RS symbols in accordance with the first method 901. The electronic device may obtain a second channel estimation result ĥ*ᵢₙₛₜ* through the RS symbol sample 960 in accordance with the second method 902. The electronic device may obtain the first channel estimation result ĥ*_{acc}* regardless of uplink RSs in an estimation RS symbol. The electronic device may obtain the second channel estimation result ĥ*ᵢₙₛₜ* regardless of the uplink RSs in the estimation RS symbol. The electronic device according to embodiments of the present disclosure may first obtain a channel estimation result in accordance with each method without considering the uplink RSs received in the estimation RS symbol in order to reduce an effect due to noise and interference in a variable channel environment.

The electronic device may obtain uplink RSs received through at least one antenna. As described with reference to FIG. 7C, sequences of the uplink RSs may be dependent on a position of a transmitted resource and an antenna port. The electronic device may obtain uplink RSs corresponding to the corresponding antenna port in the estimation RS symbol. As an example, the electronic device may obtain the uplink RSs through an antenna of the electronic device (e.g., corresponding to one of 1000, 1001, 1002, 1003, 1004, 1005, 1006, and 1007, which are DMRS antenna ports). As an example, the electronic device may obtain the uplink RSs corresponding to a specific antenna port (e.g., a DMRS antenna port) through a separate device (e.g., an RU or an MMU) connected to the electronic device.

The uplink RSs received in the estimation RS symbol may be represented by the following equation. [Equation 1] $Y \left(i\right) = H \left(i\right) ⋅ c \left(i\right) + n \left(i\right)$

The Y(i) indicates a received signal received in an i-th subcarrier with respect to *Nᵣₓ* antenna(s). The Y(i) may be a vector having a size of Nᵣₓx1, and may be $Y \left(i\right) = \left[\begin{matrix}{y}_{0} \\ ⋮ \\ {y}_{{N}_{rx} - 1}\end{matrix}\right]$. The H(i) indicates a channel estimation result for the received signal received in the i-th subcarrier with respect to the *Nᵣₓ* antenna(s). The H(i) may be a vector having a size of Nᵣₓx1, and may be $H \left(i\right) = \left[\begin{matrix}{h}_{0} \\ ⋮ \\ {h}_{{N}_{rx} - 1}\end{matrix}\right]$ . The n(i) indicates noise for the received signal received in the i-th subcarrier with respect to the *Nᵣₓ* antenna(s). The n(i) may be a vector having a size of Nᵣₓx1, and may be $n \left(i\right) = \left[\begin{matrix}{n}_{0} \\ ⋮ \\ {n}_{{N}_{rx} - 1}\end{matrix}\right]$ . The c(i) indicates a DMRS sequence IQ value received in the i-th subcarrier, and is a scalar value.

If [Equation 1] is represented as an equation for each antenna, it is as follows. [Equation 2] ${y}_{rx} \left(i\right) = {h}_{rx} \left(i\right) ⋅ c \left(i\right) + {n}_{rx} \left(i\right)$

The *yᵣₓ*(*i*) indicates a received signal received in an i-th subcarrier at an rx reception antenna. The *hᵣₓ*(*i*) indicates a channel estimation result of the received signal received in the *i-*th subcarrier at the rx reception antenna. The *nᵣₓ*(*i*) indicates noise for the received signal received in the *i*-th subcarrier at the rx reception antenna. The c(i) indicates a DMRS sequence IQ value received in the *i*-th subcarrier, and is a scalar value.

Since the electronic device receives a sequence (e.g., a DMRS sequence) known in advance in the estimation RS symbol, it may perform decorrelation on a received signal. The electronic device may obtain an equalization value as a result of the decorrelation. For example, the electronic device may determine an equalization value (hereinafter, a first equalization value) by using the first channel estimation result, the sequence, and a signal received in the estimation RS symbol. As an example, the first equalization value may be determined based on the following equation. [Equation 3] ${EQ}_{acc} \left[i\right] = {y}_{rx} \left(i\right) ⋅ c * \left(i\right) ⋅ {\hat{h}}_{acc} *$

The EQ_{ac}[i] indicates the first equalization value, the *yᵣₓ*(*i*) indicates a received signal received in an *i*-th subcarrier, and the c(i) indicates a DMRS sequence IQ value received in the *i-*th subcarrier and is a scalar value. The ĥ*_{acc}* indicates the first channel estimation result in accordance with the first method 901. [Equation 4] ${EQ}_{Inst} \left[i\right] = {y}_{rx} \left(i\right) ⋅ c * \left(i\right) ⋅ {\hat{h}}_{inst} *$

The EQ_{Inst}[i] indicates the second equalization value, the *yᵣₓ*(*i*) indicates a received signal received in an i-th subcarrier, and the c(i) indicates a DMRS sequence IQ value received in the i-th subcarrier and is a scalar value. The ĥ*ᵢₙₛₜ* indicates the second channel estimation result in accordance with the second method 902.

If an ideal channel estimation result is assumed, the ideal equalization value is as follows. [Equation 5] ${EQ}_{Ideal} \left[i\right] = {y}_{rx} \left(i\right) ⋅ c * \left(i\right) ⋅ {h}_{rx} \left(i\right) * = {h}_{rx} \left(i\right) ⋅ c \left(i\right) ⋅ c * \left(i\right) ⋅ {h}_{rx} \left(i\right) * = {\left|{h}_{rx}\left(i\right)\right|}^{2}$

The EQ_{Ideal}[i] indicates the ideal equalization value, the *yᵣₓ*(*i*) indicates a received signal received in an *i*-th subcarrier, and the c(i) indicates a DMRS sequence IQ value received in the *i*-th subcarrier and is a scalar value. The *hᵣₓ*(*i*) indicates a channel estimation result of the received signal received in the *i*-th subcarrier at an rx reception antenna.

If there is no noise and channel estimation is accurate, the ideal equalization value may be a real value. Meanwhile, if channel estimation is not accurate, the equalization value may be a complex value including a real part and an imaginary part. In other words, as a channel estimation result is closer to an actual channel value, a size of the real part may be large and a size of the imaginary part may be small. A complex plane may be used to describe how close the channel estimation result is to the actual channel value.

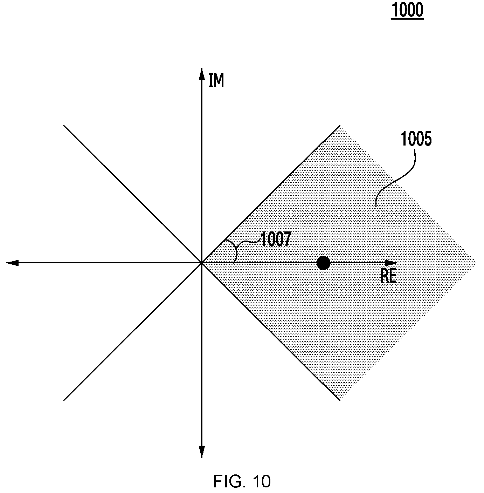

FIG. 10 illustrates an example of a complex plane for an equalization value of a received signal.

Referring to FIG. 10, a horizontal axis of a complex plane 1000 indicates a real axis, and a vertical axis of the complex plane 1000 indicates an imaginary axis. As described above, as noise is smaller and as a channel estimation result is more accurate, the electronic device may obtain an equalization value closer to the real axis. As the channel estimation result is less accurate, it may be farther from the real axis. That is, since the electronic device knows in advance a sequence and a modulation method (e.g., QPSK) transmitted from a terminal, the electronic device may evaluate the first equalization value and the second equalization value. According to an embodiment, if a phase 1007 is between about (+)45 degrees and about (-)45 degrees around the real axis, the electronic device may determine that a corresponding equalization value is valid. That the equalization value is valid may indicate that channel estimation has been performed accurately above a certain level.

The electronic device may determine the first estimation metric by using the first channel estimation result in accordance with the first method 901. The first estimation metric may indicate how close the first channel estimation result is to an actual channel. The electronic device may determine whether the first equalization value is positioned within a valid region 1005 with respect to each of subcarriers to which an estimation RS symbol is mapped. For example, the electronic device may identify, as the first estimation metric, the number of REs in which the first equalization value is positioned within the valid region 1005. In the same manner, the electronic device may determine the second estimation metric by using the second channel estimation result in accordance with the second method 902. The second estimation metric may indicate how close the second channel estimation result is to an actual channel. The electronic device may determine whether the second equalization value is positioned within the valid region 1005 with respect to each of the subcarriers to which the estimation RS symbol is mapped. For example, the electronic device may identify, as the second estimation metric, the number of REs in which the second equalization value is positioned within the valid region 1005. For example, the electronic device may determine an estimation metric in accordance with each of the first method 901 and the second method 902 based on the following equation. [Equation 6] $CorrectCn {t}_{acc} = {\sum }_{i} \left\{\left({EQ}_{acc}\left[i\right].r>{EQ}_{acc}\left[i\right].i\right)&\left({EQ}_{acc}\left[i\right].r>-{EQ}_{acc}\left[i\right].i\right)\right\}$

The ***CorrectCnt_{acc}*** indicates the first estimation metric. The EQ_{acc}[i].*r* > EQ_{acc}[i].*i* indicates that a real part of an equalization value in accordance with the first channel estimation result is greater than an imaginary part. The (EQ_{acc}[i].*r* > -EQ_{acc}[i].*i*) indicates that the real part of the equalization value in accordance with the first channel estimation result is greater than a negative value of the imaginary part. [Equation 7] $CorrectCn {t}_{inst} = {\sum }_{i} \left\{\left({EQ}_{Inst}\left[i\right].r>{EQ}_{Inst}\left[i\right].i\right)&\left({EQ}_{Inst}\left[i\right].r>-{EQ}_{Inst}\left[i\right].i\right)\right\}$

The ***CorrectCntᵢₙₛₜ*** indicates the second estimation metric. TheEQ_{Inst}[i].*r* > EQ_{Inst}[i]. *i* indicates that a real part of an equalization value in accordance with the second channel estimation result is greater than an imaginary part. The (EQ_{Inst}[i].*r* > -EQ_{Inst}[i].*i*) indicates that the real part of the equalization value in accordance with the second channel estimation result is greater than a negative value of the imaginary part.

The electronic device may determine an estimation metric by performing the above-described determination for all REs allocated to the estimation RS symbol. The electronic device may count REs positioned within the valid region 1005. The first estimation metric indicates the number of REs in which the equalization value is positioned within the valid region 1005 when the first channel estimation result in accordance with the first method 901 is used. The second estimation metric indicates the number of REs in which the equalization value is positioned within the valid region 1005 when the second channel estimation result in accordance with the second method 902 is used.

The electronic device may determine, through a comparison between the first estimation metric and the second estimation metric, whether it is advantageous to perform channel estimation of a current slot by using channel estimation results accumulated in a plurality of slots, or whether it is advantageous to perform channel estimation only in the current slot. For example, the electronic device may determine a comparison metric in accordance with the following equation. [Equation 8] ${Metric}_{DOP} = CorrectCn {t}_{inst} - CorrectCn {t}_{acc}$ [Equation 9] $if \left(Metri{c}_{DOP}<TH\right) use {\hat{h}}_{acc} , else use {\hat{h}}_{inst}$

The Metric_{DOP} indicates the comparison metric. The *TH* indicates a threshold value set in the electronic device. According to Equation 9, if the comparison metric is smaller than the threshold value, the electronic device may use the first channel estimation result. As a *Metric_{DOP}* value becomes smaller, the first estimation metric may become greater than the second estimation metric. That is, the *Metric_{DOP}* value smaller than the threshold value may indicate that the first channel estimation result is relatively more accurate than the second channel estimation result. The *Metric_{DOP}* value greater than or equal to the threshold value may indicate that the second channel estimation result is relatively more accurate than the first channel estimation result. The electronic device may obtain a channel estimation result in a slot (hereinafter, an estimation slot) including the estimation RS symbol in accordance with the first method 901. If the comparison metric is greater than or equal to the threshold value, the electronic device may use the second channel estimation result. The electronic device may obtain a channel estimation result in an estimation slot including the estimation RS symbol in accordance with the second method 902.

Meanwhile, the comparison metric of Equation 8 is an example, and division or another comparison operation may of course be performed in addition to subtraction. In accordance with a type of the comparison metric, the threshold value may vary. Likewise, a representation of Equation 9 is an exemplary operation, and a method of comparing two estimation metrics may be understood as an embodiment of the present disclosure. According to an embodiment, the electronic device may determine a channel estimation method of an estimation slot including an estimation RS symbol based on a comparison result between the first estimation metric and the second estimation metric. The electronic device may identify one of the first method 901 using at least two slots among a plurality of slots in accordance with slot aggregation and the second method 902 using a single slot.

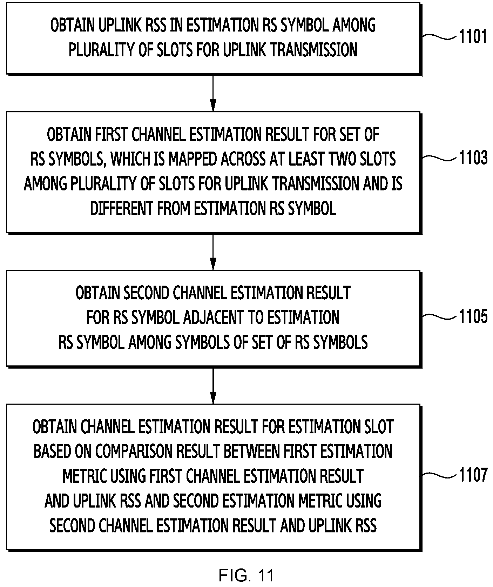

FIG. 11 illustrates an operation flow of an electronic device (e.g., a base station 110 or a DU 210) for channel estimation.

Referring to FIG. 11, in operation 1101, the electronic device may obtain uplink RSs in an estimation RS symbol among a plurality of slots for uplink transmission. The electronic device may receive uplink signals from another electronic device (e.g., a terminal 120). The another electronic device may be configured to perform repetitive transmission. The repetitive transmission may be performed across multiple slots in the same frequency region. For example, the another electronic device may transmit uplink signals across a plurality of slots in accordance with slot aggregation in accordance with a network configuration or a separate setting of the number of repetitions. The another electronic device may transmit uplink data in each slot. Each slot may include uplink RSs for demodulation of the uplink data. The electronic device may perform channel estimation on a slot basis. The electronic device may perform channel estimation for RSs in a slot, and then may perform channel estimation for uplink data in the slot by using a result of the channel estimation for the RSs. The electronic device may demodulate the uplink data by using a result of the channel estimation for the uplink data. A slot in which such channel estimation is performed may be referred to as an estimation slot. The estimation RS symbol indicates, in the estimation slot, an RS symbol for which channel estimation for a current uplink RS is performed. The electronic device may receive the uplink RSs. The electronic device may determine an RS sequence that would have been actually transmitted by the another electronic device based on a resource position of the estimation RS symbol.

In operation 1103, the electronic device may obtain a first channel estimation result for a set of RS symbols (e.g., the set 910 of RS symbols, the set 910 of RS symbols, the set 930 of RS symbols, or the set 940 of RS symbols), which is mapped across at least two slots among a plurality of slots for uplink transmission and is different from the estimation RS symbol. The electronic device may perform channel estimation in accordance with a first method (e.g., a first method 901) using accumulated channel estimation results for a plurality of slots. The electronic device may obtain the first channel estimation result by using all channel estimation results of RS symbols of the set of RS symbols. As an example, the first channel estimation result may be an average of estimation values accumulated across multiple slots.

In operation 1105, the electronic device may obtain a second channel estimation result for an RS symbol (e.g., the RS symbol sample 960, the RS symbol sample 970, the RS symbol sample 980, or the RS symbol sample 990), which is adjacent to the estimation RS symbol among symbols of the set of RS symbols. The electronic device may perform channel estimation in accordance with a second method (e.g., a second method 902) using a channel estimation result in a single slot (e.g., a channel estimation result in an instantaneous symbol). For example, the electronic device may use a channel estimation result previously obtained for the RS symbol. For example, it may perform channel estimation for the RS symbol by comparing a signal received in the RS symbol adjacent to the estimation RS symbol and a predefined sequence.

In operation 1107, the electronic device may obtain a channel estimation result for the estimation slot, based on a comparison result between a first estimation metric using the first channel estimation result and uplink RSs and a second estimation metric using a second channel estimation result and uplink RSs.

The electronic device may determine a first equalization value by using the first channel estimation result of the operation 1103, the uplink RSs, and an uplink sequence in the estimation RS symbol. For example, the electronic device may determine the first equalization value in each of subcarriers corresponding to the estimation RS symbol in a time domain. For example, in order to determine the first equalization value, the descriptions of [Equation 3] may be referenced. The electronic device may determine the first estimation metric by using the first equalization value. The first estimation metric may indicate how close the first channel estimation result is to an actual channel (in other words, accuracy of channel estimation). For example, in order to determine the first estimation metric, the electronic device may determine, for each of the subcarriers, how much the first equalization value differs from an ideal value. For example, the electronic device may determine, for each subcarrier, whether a phase (e.g., a phase 1007) of the first equalization value is within a threshold range. The phase may indicate an angle between a real part and an imaginary part of an equalization value in a complex plane. As channel estimation is performed better, the equalization value may be closer to a real number. The electronic device may determine the number of subcarriers in which the first equalization value is positioned within the threshold range from a real axis. For the first estimation metric, the descriptions of [Equation 6] may be referenced.

The electronic device may determine a second equalization value by using the second channel estimation result of the operation 1103, the uplink RSs, and an uplink sequence in the estimation RS symbol. For example, the electronic device may determine the second equalization value in each of subcarriers corresponding to the estimation RS symbol in a time domain. For example, in order to determine the first equalization value, the descriptions of [Equation 4] may be referenced. The second estimation metric may be determined by using the second equalization value. The second estimation metric may indicate how close the first channel estimation result is to an actual channel (in other words, accuracy of channel estimation). For example, in order to determine the second estimation metric, the electronic device may determine, for each of the subcarriers, how much the second equalization value differs from an ideal value. The electronic device may determine, for each subcarrier, whether a phase (e.g., a phase 1007) of the second equalization value is within a threshold range. The electronic device may determine the number of subcarriers in which the second equalization value is positioned within the threshold range from a real axis. For the first estimation metric, the descriptions of [Equation 6] may be referenced.

The electronic device may compare the first estimation metric and the second estimation metric. The electronic device may select which estimation method among the first method 901 and the second method 902 is more advantageous to a current channel state, based on a comparison result between the first estimation metric and the second estimation metric. The electronic device may identify, in an RS symbol, a channel estimation method (e.g., the first method 901 or the second method 902) suitable for the RS symbol through a comparison of the first estimation metric and the second estimation metric. For example, in a case that the first estimation metric is higher than the second estimation metric, the electronic device may identify a method (e.g., the first method 901) using channel estimation results accumulated across at least two or more slots. In a case that the first estimation metric is lower than the second estimation metric, the electronic device may identify a method (e.g., the second method 902) using a channel estimation result for a single slot (e.g., an RS symbol sample). Meanwhile, an offset may be set to a specific estimation metric. As an example, a comparison using a threshold value (e.g., 'TH') as in [Equation 8] and [Equation 9] may be performed. In a case that the threshold value is positive, it may be understood that an offset advantageous to the first estimation metric is set in the corresponding equation.

The electronic device may perform channel estimation for the estimation slot in accordance with the identified method. The electronic device may use channel estimation results of a plurality of slots including the estimation slot, or may use only a channel estimation result of the estimation slot itself.

For example, the electronic device may obtain a channel estimation result by using a signal received in the estimation RS symbol and a sequence in the estimation RS symbol. In a case that the first method 901 is identified, the electronic device may perform channel estimation for data symbols in the estimation slot by using the obtained channel estimation result and estimation results of previous slots. In a case that the second method 902 is identified, the electronic device may perform channel estimation for data symbols in the estimation slot by using only a channel estimation result (including the obtained channel estimation result) for an RS symbol of the estimation slot itself.

In FIG. 11, an RS symbol sample has been described as a symbol adjacent to an estimation RS symbol, but embodiments of the present disclosure are not limited thereto. According to a non-limiting embodiment, the electronic device may determine the RS symbol sample as an RS symbol at a predefined position in a slot (e.g., a first RS symbol in the slot, or a first RS symbol among RS symbols located in a region to which PUSCH is mapped).

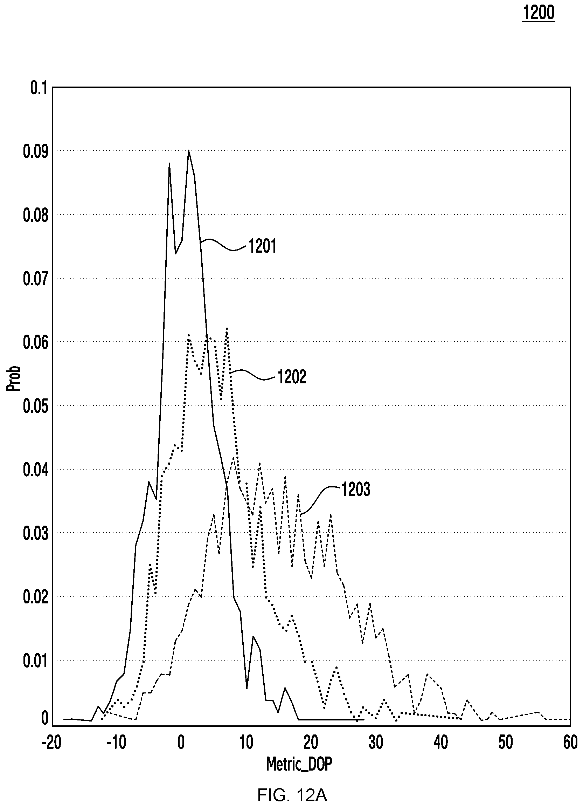

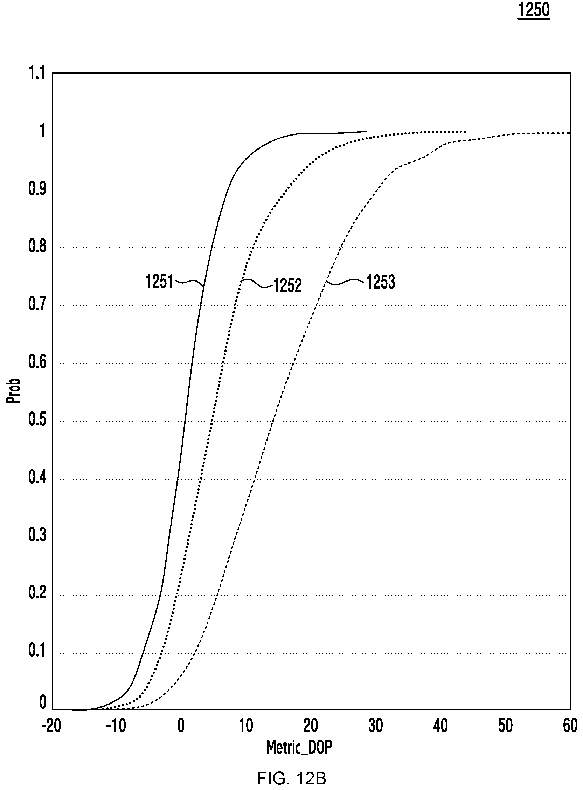

FIG. 12A and FIG. 12B are diagrams for describing a relationship between a comparison metric and a Doppler frequency.

Referring to FIG. 12A, a graph 1200 indicates a probability density function (PDF) in accordance with a comparison metric. A horizontal axis of the graph 1200 indicates the comparison metric. A vertical axis of the graph 1200 indicates the PDF. The comparison metric may be a result of comparing a first estimation metric obtained through a first channel estimation result and a second estimation metric obtained through a second channel estimation result. For example, the comparison metric may be a value obtained by subtracting the first estimation metric obtained through the first channel estimation result from the second estimation metric obtained through the second channel estimation result. As an example, [Equation 8] may be referenced for the comparison metric.

A first line 1201 indicates a PDF in accordance with a comparison metric when a Doppler frequency is 10Hz. A second line 1202 indicates a PDF in accordance with a comparison metric when a Doppler frequency is 100Hz. A third line 1203 indicates a PDF in accordance with a comparison metric when a Doppler frequency is 200Hz. Comparing the first line 1201, the second line 1202, and the third line 1203, it may be identified that, the comparison metric relatively increases as the Doppler frequency increases. As the comparison metric increases, it may be identified that the second estimation metric is more advantageous than the first estimation metric. In other words, in an environment with a high Doppler frequency (e.g., a communication environment having a high-speed moving terminal), using a channel estimation result in a single slot (e.g., a second method 902) may be more advantageous to channel estimation performance than using channel estimation results of accumulated slots (e.g., a first method 901). Likewise, in an environment having a low Doppler frequency (e.g., a communication environment with a low-speed moving terminal), using channel estimation results of accumulated slots (e.g., the first method 901) may be more advantageous in terms of channel estimation than using a channel estimation result in a single slot (e.g., the second method 902).

Referring to FIG. 12B, a graph 1250 indicates a cumulative distribution function (CDF) in accordance with a comparison metric. A horizontal axis of the graph 1250 indicates the comparison metric. A vertical axis of the graph 1250 indicates the CDF. The comparison metric may be a result of comparing the first estimation metric obtained through the first channel estimation result and the second estimation metric obtained through the second channel estimation result. For example, the comparison metric may be a value obtained by subtracting the first estimation metric obtained through the first channel estimation result from the second estimation metric obtained through the second channel estimation result. As an example, [Equation 8] may be referenced for the comparison metric.

A first line 1251 indicates a CDF in accordance with a comparison metric when a Doppler frequency is 10Hz. A second line 1252 indicates a CDF in accordance with a comparison metric when a Doppler frequency is 100Hz. A third line 1253 indicates a CDF in accordance with a comparison metric when a Doppler frequency is 200Hz. Comparing the first line 1251, the second line 1252, and the third line 1253, it may be identified that a value of the comparison metric converging to 1 gradually increases as the Doppler frequency increases. As the comparison metric increases, it may be identified that the second estimation metric is greater than the first estimation metric. A magnitude of an estimation metric may indicate accuracy of an estimation result of the estimation metric. In other words, as in FIG. 12A, the graph 1250 may indicate that the second method 902 is more advantageous to channel estimation performance than the first method 901, in an environment having a high Doppler frequency (e.g., a communication environment with a high-speed moving terminal). Likewise, the graph 1250 may indicate that the first method 901 is more advantageous to channel estimation performance than the second method 902 in an environment having a low Doppler frequency (e.g., a communication environment with a low-speed moving terminal).

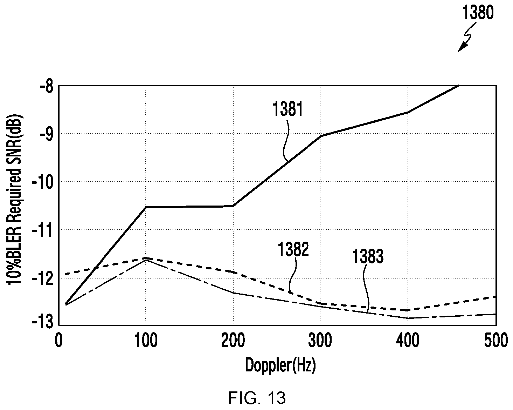

FIG. 13 illustrates examples of channel estimation performance in accordance with a Doppler frequency.

Referring to FIG. 13, a graph 1380 indicates communication quality in accordance with a Doppler frequency. A horizontal axis of the graph 1380 indicates a Doppler frequency (unit: Hz), and a vertical axis indicates an SNR (unit: dB) for satisfying a BLER of 10% or less. A first line 1381 indicates a SNR required when using a channel estimation result of 8 slots, and a second line 1382 indicates a SNR required when using a channel estimation result of 1 slot. A third line 1383 indicates communication quality when using a channel estimation result obtained by adaptively selecting one of the first method 901 and the second method 902 in accordance with the comparison metric described through FIG. 9A to FIG. 12B. The third line 1383 indicates a lower SNR than the first line 1381 and the second line 1382 at any Doppler frequency. A method of adaptively selecting one of the first method 901 and the second method 902 may provide higher channel estimation performance than a fixed method (e.g., the first method 901 of the first line 1381 or the second method 902 of the second line 1382).

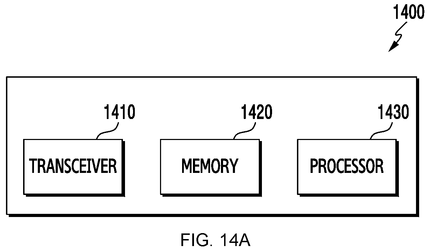

FIG. 14A illustrates a functional configuration of an electronic device. The configuration exemplified in FIG. 14A may be understood as a configuration of a base station (e.g., a base station 110) or a DU (e.g., the DU 210 of FIG. 2) as a portion of the base station. Hereinafter, the terms '...unit' and '...er' used below refer to a unit processing at least one function or operation, which may be implemented by hardware or software, or a combination of hardware and software.

Referring to FIG. 14A, an electronic device 1400 (e.g., the DU 210) includes a transceiver 1410, memory 1420, and a processor 1430.

The transceiver 1410 may perform functions for transmitting and receiving a signal in a wired communication environment. The transceiver 1410 may include a wired interface for controlling a direct device-to-device connection through a transmission medium (e.g., copper wire, optical fiber). For example, the transceiver 1410 may transmit an electrical signal to another device through a copper wire or perform conversion between an electrical signal and an optical signal. The electronic device 1400 may communicate with a radio unit (RU) through the transceiver 1410.

The transceiver 1410 may also perform functions for transmitting and receiving a signal in a wireless communication environment. For example, the transceiver 1410 may perform a conversion function between a baseband signal and a bit string in accordance with a physical layer specification of a system. For example, upon transmitting data, the transceiver 1410 generates complex-valued symbols by encoding and modulating a transmission bit string. In addition, upon receiving data, the transceiver 1410 restores a received bit string by demodulating and decoding a baseband signal. In addition, the transceiver 1410 may include a plurality of transmission/reception paths.

The transceiver 1410 may transmit and receive a signal. For example, the transceiver 1410 may transmit a management plane (M-plane) message. For example, the transceiver 1410 may transmit a management plane (S-plane) message. For example, the transceiver 1410 may transmit a control plane (C-plane) message. For example, the transceiver 1410 may transmit a user plane (U-plane) message. For example, the transceiver 1410 may receive the U-plane message. Although only the transceiver 1410 is illustrated in FIG. 14A, the electronic device 1400 may include two or more transceivers according to another implementation.

The transceiver 1410 transmits and receives a signal as described above. Accordingly, all or some of the transceiver 1410 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 1410. According to an embodiment, the transceiver 1410 may obtain, from an RU (e.g., the RU 220), random access signals related to NPRACH for which physical layer processing is performed. For example, the transceiver 1410 may obtain a signal (e.g., a frequency domain signal) for which CP removal and FFT are performed on received signals.

Although not illustrated in FIG. 14A, the transceiver 1410 may further include a backhaul transceiver for connection with a core network or another base station. The backhaul transceiver may provide an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 1420 stores a basic program, an application program, and data such as configuration information for an operation of the electronic device 1400. The memory 1420 may be referred to as a storage unit. The memory 1420 may be configured with a volatile memory, a nonvolatile memory, or a combination of the volatile memory and the nonvolatile memory. In addition, the memory 1420 provides stored data in accordance with a request from the processor 1430.

The processor 1430 controls overall operations of the electronic device 1400. The processor 1430 may be referred to as a control unit. For example, the processor 1430 transmits and receives a signal through the transceiver 1410 (or through a backhaul communication unit). In addition, the processor 1430 writes and reads data in the memory 1420. In addition, the processor 1430 may perform functions of a protocol stack required in a communication standard. Although only the processor 1430 is illustrated in FIG. 14A, the electronic device 1400 may include two or more processors according to another implementation.

According to an embodiment, the processor 1430 may perform physical layer processing on signals received from an RU (e.g., the RU 220). For example, the processor 1430 may perform subcarrier demapping (RE demapping) on the received signals. For example, the processor 1430 may obtain a noise-interference component (e.g., a noise-interference covariance matrix) based on received reference signals. In addition, for example, the processor 1430 may perform channel estimation based on the received reference signals. The processor 1430 may determine a weight for a reception combiner. The processor 1430 may determine data corresponding to an uplink signal.

A configuration of the electronic device 1400 illustrated in FIG. 14A is only an example, and an example of the DU performing the embodiments of the present disclosure is not limited to the configuration illustrated in FIG. 14A. In some embodiment, some configurations may be added, deleted, or changed.

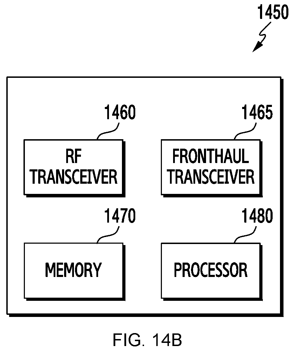

FIG. 14B illustrates a functional configuration of a wireless electronic device (e.g., an RU 220 or an MMU). Hereinafter, the RU 220 is exemplified as the wireless electronic device, but at least some of descriptions described below may be applied to another wireless electronic device. A configuration exemplified in FIG. 11B, which is as a portion of a base station, may be understood as a configuration of the RU 220 of FIG. 2. Hereinafter, the terms '...unit' and '...er' used below refer to a unit processing at least one function or operation, which may be implemented by hardware or software, or a combination of hardware and software.

Referring to FIG. 14B, a wireless electronic device 1450 (e.g., the RU 220) includes an RF transceiver 1460, a fronthaul transceiver 1465, memory 1470, and a processor 1480.

The RF transceiver 1460 performs functions for transmitting and receiving a signal through a wireless channel. For example, the RF transceiver 1460 up-converts a baseband signal into an RF band signal and then transmits it through an antenna, and down-converts an RF band signal received through the antenna into a baseband signal. For example, the RF transceiver 1460 may include a transmission filter, a reception filter, an amplifier, a mixer, an oscillator, a DAC, an ADC.

The RF transceiver 1460 may include a plurality of transmission/reception paths. Furthermore, the RF transceiver 1460 may include an antenna unit. The RF transceiver 1460 may include at least one antenna array composed of a plurality of antenna elements. In terms of hardware, the RF transceiver 1460 may be composed of a digital circuit and an analog circuit (e.g., a radio frequency integrated circuit (RFIC)). Herein, the digital circuit and the analog circuit may be implemented as a single package. In addition, the RF transceiver 1460 may include a plurality of RF chains. The RF transceiver 1460 may perform beamforming. In order to provide directivity to a signal to be transmitted and received in accordance with the setting of the processor 1480, the RF transceiver 1460 may apply beamforming weights to the signal. According to an embodiment, the RF transceiver 1460 may include a plurality of antennas.

According to an embodiment, the RF transceiver 1460 may transmit and receive a signal on a radio access network. For example, the RF transceiver 1460 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 1460 may receive an uplink signal. For example, the uplink signal may include a random access-related signal (e.g., NPRACH or NPUSCH). According to an embodiment, the RF transceiver 1460 may receive signals including a random access signal through a plurality of antennas included in the RF transceiver 1460. Although only the RF transceiver 1460 is illustrated in FIG. 14B, according to another implementation, the wireless electronic device 1450 may include two or more RF transceivers.

The fronthaul transceiver 1465 may transmit and receive a signal. According to an embodiment, the fronthaul transceiver 1465 may transmit and receive a signal on a fronthaul interface. For example, the fronthaul transceiver 1465 may receive a management plane (M-plane) message. For example, the fronthaul transceiver 1465 may receive a management plane (S-plane) message. For example, the fronthaul transceiver 1465 may receive a control plane (C-plane) message. For example, the fronthaul transceiver 1465 may transmit a user plane (U-plane) message. For example, the fronthaul transceiver 1465 may receive a U-plane message. According to an embodiment, the fronthaul transceiver 1465 may transmit, to a DU (e.g., a DU 210), a signal (e.g., a frequency domain signal) for which CP removal and FFT are performed. Although only the fronthaul transceiver 1465 is illustrated in FIG. 14B, the wireless electronic device 1450 may include two or more fronthaul transceivers according to another implementation.

As described above, the RF transceiver 1460 and the fronthaul transceiver 1465 transmit and receive a signal. Accordingly, all or some of the RF transceiver 1460 and the fronthaul transceiver 1465 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 1460. In the following description, transmission and reception performed through a wireless channel are used to the meaning including that the processing as described above is performed by the RF transceiver 1460.

The memory 1470 stores a basic program, an application program, and data such as configuration information for an operation of the wireless electronic device 1450. The memory 1470 may be referred to as a storage unit. The memory 1470 may be configured with a volatile memory, a nonvolatile memory, or a combination of the volatile memory and the nonvolatile memory. In addition, the memory 1470 provides stored data in accordance with a request from the processor 1480.

The processor 1480 controls overall operations of the wireless electronic device 1450. The processor 1480 may be referred to as a control unit. For example, the processor 1480 transmits and receives a signal through the RF transceiver 1460 or the fronthaul transceiver 1465. In addition, the processor 1480 writes and reads data in the memory 1470. In addition, the processor 1480 may perform functions of a protocol stack required by a communication standard. Although only the processor 1480 is illustrated in FIG. 14B, the wireless electronic device 1450 may include two or more processors according to another implementation. The processor 1480, which is an instruction set or code stored in the memory 1470, may be an instruction/code at least temporarily resided in the processor 1480 or a storage space storing instruction/code, or a portion of circuitry constituting the processor 1480. In addition, the processor 1480 may include various modules for performing communication. The processor 1480 may control the wireless electronic device 1450 to perform operations according to embodiments to be described later.

A configuration of the wireless electronic device 1450 illustrated in FIG. 14B is only an example, and an example of an RU performing the embodiments of the present disclosure is not limited to the configuration illustrated in FIG. 14B. In some embodiment, some configurations may be added, deleted, or changed.

In the present disclosure, a technique for adaptively selecting whether to use a channel estimation result accumulated across multiple slots or to use a channel estimation result for a current slot in a weak electric field situation (e.g., a situation in which repetitive transmission is performed for slot aggregation or a low-power terminal (e.g., an MTC terminal, a reduced capability (RedCap) UE, or an NB-IoT terminal)) has been described. An electronic device may provide channel estimation performance robust to a change in a channel state by adaptively selecting a channel estimation method in accordance with an estimation metric. Even in a situation in which Doppler estimation of a fading channel is difficult, high channel estimation performance may be provided by selecting a channel estimation method in consideration of an effect of Doppler.

The effects that may be obtained from the present disclosure are not limited to those described above, and any other effects not mentioned herein will be clearly understood by those having ordinary knowledge in the art to which the present disclosure belongs, from the following description.

In embodiments of the present disclosure, an electronic device is provided. The electronic device may comprise at least one processor including processing circuitry. The electronic device may comprise memory, including one or more storage mediums, storing instructions. The instructions, when executed by the at least one processor individually or collectively, may cause the electronic device to obtain uplink reference signals (RSs) in an estimation RS symbol of an estimation slot among a plurality of slots for uplink transmission, obtain a first channel estimation result for a set of RS symbols, which is different from the estimation RS symbol and mapped across at least two slots of the plurality of slots for uplink transmission, obtain a second channel estimation result for an RS symbol adjacent to the estimation RS symbol among RS symbols of the set of RS symbols, and obtain a channel estimation result for the estimation slot, based on a comparison result between a first estimation metric using the uplink RSs and the first channel estimation result and a second estimation metric using the uplink RSs and the second channel estimation result.

For example, the at least two slots of the plurality of slots may be consecutive in a time domain. The RS symbols in the set of RS symbols may be consecutive in total RS symbols of the at least consecutive two slots.

For example, the instructions, when executed by the at least one processor, may cause the electronic device to, in a case that the first estimation metric is larger than the second estimation metric, obtain the channel estimation result, based on channel estimation for RS symbols of slots including the estimation slot, and in a case that the first estimation metric is not larger than the second estimation metric, obtain the channel estimation result, based on channel estimation for RS symbols of the estimation slot.

For example, the first estimation metric may indicate the number of resource elements (REs) in which a phase of a first equalization value using the first channel estimation result is within a threshold range. The second estimation metric may indicate the number of REs in which a phase of a second equalization value using the second channel estimation result is within a threshold range.

For example, the first equalization value may be determined based on the first channel estimation result, an uplink sequence in the estimation RS symbol, and a received signal in the estimation RS symbol. The second equalization value may be determined based on the second channel estimation result, the uplink sequence in the estimation RS symbol, and the received signal in the estimation RS symbol.

For example, the uplink sequence in the estimation RS symbol may be determined in accordance with an antenna port corresponding to the received signal in the estimation RS symbol and a position of the estimation RS symbol.

For example, the instructions, when executed by the at least one processor individually or collectively, may cause the electronic device to demodulate uplink data in the estimation slot based on the channel estimation result.

For example, the number of the plurality of slots in accordance with slot aggregation may be 2, 4, or 8. Uplink data in the at least two slots may be received in a same frequency region. The uplink RSs may comprise demodulation reference signals (DMRSs) for the uplink data.

For example, the RS symbol adjacent to the estimation RS symbol may be included in the estimation slot including the estimation RS symbol.

For example, the estimation RS symbol may be a leading symbol among the RS symbols of the estimated slot. The RS symbol adjacent to the estimation RS symbol may be included in a previous slot adjacent to the estimation slot.

In embodiments of the present disclosure, a method performed by an electronic device is provided. The method may comprise obtaining uplink reference signals (RSs) in an estimation RS symbol of an estimation slot among a plurality of slots for uplink transmission, obtaining a first channel estimation result for a set of RS symbols, which is different from the estimation RS symbol and mapped across at least two slots of the plurality of slots for uplink transmission, obtaining a second channel estimation result for an RS symbol adjacent to the estimation RS symbol among RS symbols of the set of RS symbols, and obtaining a channel estimation result for the estimation slot, based on a comparison result between a first estimation metric using the uplink RSs and the first channel estimation result and a second estimation metric using the uplink RSs and the second channel estimation result.

For example, the at least two slots of the plurality of slots may be consecutive in a time domain. The RS symbols in the set of RS symbols may be consecutive in total RS symbols of the at least consecutive two slots.

For example, the method may comprise, in a case that the first estimation metric is larger than the second estimation metric, obtaining the channel estimation result, based on channel estimation for RS symbols of slots including the estimation slot, and in a case that the first estimation metric is not larger than the second estimation metric, obtaining the channel estimation result, based on channel estimation for RS symbols of the estimation slot.

For example, the first estimation metric may indicate the number of resource elements (REs) in which a phase of a first equalization value using the first channel estimation result is within a threshold range. The second estimation metric may indicate the number of REs in which a phase of a second equalization value using the second channel estimation result is within a threshold range.

For example, the first equalization value may be determined based on the first channel estimation result, an uplink sequence in the estimation RS symbol, and a received signal in the estimation RS symbol. The second equalization value may be determined based on the second channel estimation result, the uplink sequence in the estimation RS symbol, and the received signal in the estimation RS symbol.

For example, the uplink sequence in the estimation RS symbol may be determined in accordance with an antenna port corresponding to the received signal in the estimation RS symbol and a resource position of the estimation RS symbol.

For example, the method may comprise demodulating uplink data in the estimation slot based on the channel estimation result.

For example, the number of the plurality of slots in accordance with slot aggregation may be 2, 4, or 8. Uplink data in the at least two slots may be received in a same frequency region. The uplink RSs may comprise demodulation reference signals (DMRSs) for the uplink data.

For example, the RS symbol adjacent to the estimation RS symbol may be included in the estimation slot including the estimation RS symbol.

For example, the estimation RS symbol may be a leading symbol among the RS symbols of the estimated slot. The RS symbol adjacent to the estimation RS symbol may be included in a previous slot adjacent to the estimation slot.

In embodiments of the present disclosure, a non-transitory computer readable storage medium is provided. The non-transitory computer readable storage medium, when executed by a processor, may comprise instructions that cause an electronic device to perform operations including obtaining uplink reference signals (RSs) in an estimation RS symbol of an estimation slot among a plurality of slots for uplink transmission, obtaining a first channel estimation result for a set of RS symbols, which is different from the estimation RS symbol and mapped across at least two slots of the plurality of slots for uplink transmission, obtaining a second channel estimation result for an RS symbol adjacent to the estimation RS symbol among RS symbols of the set of RS symbols, and obtaining a channel estimation result for the estimation slot, based on a comparison result between a first estimation metric using the uplink RSs and the first channel estimation result and a second estimation metric using the uplink RSs and the second channel estimation result.

In embodiments of the present disclosure, an electronic device is provided. The electronic device may comprise at least one processor including processing circuitry. The at least one processor may be configured to obtain uplink reference signals (RSs) in an estimation RS symbol of an estimation slot among a plurality of slots for uplink transmission, obtain a first channel estimation result for a set of RS symbols, which is different from the estimation RS symbol and mapped across at least two slots of the plurality of slots for uplink transmission, obtain a second channel estimation result for an RS symbol adjacent to the estimation RS symbol among RS symbols of the set of RS symbols, and obtain a channel estimation result for the estimation slot, based on a comparison result between a first estimation metric using the uplink RSs and the first channel estimation result and a second estimation metric using the uplink RSs and the second channel estimation result.

For example, the at least one processor may be configured for the electronic device to, in a case that the first estimation metric is larger than the second estimation metric, obtain the channel estimation result, based on channel estimation for RS symbols of slots including the estimation slot, and in a case that the first estimation metric is not larger than the second estimation metric, obtain the channel estimation result, based on channel estimation for RS symbols of the estimation slot.

For example, the at least one processor, when executed by the at least one processor individually or collectively, may be configured for the electronic device to demodulate uplink data in the estimation slot based on the channel estimation result.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. An electronic device, comprising:
at least one processor including processing circuitry; and
memory, including one or more storage mediums, storing instructions that, when executed by the at least one processor individually or collectively, the electronic device to:
obtain uplink reference signals (RSs) in an estimation RS symbol of an estimation slot among a plurality of slots for uplink transmission;
obtain a first channel estimation result for a set of RS symbols, which is different from the estimation RS symbol and mapped across at least two slots of the plurality of slots for uplink transmission;
obtain a second channel estimation result for an RS symbol adjacent to the estimation RS symbol among RS symbols of the set of RS symbols; and
obtain a channel estimation result for the estimation slot, based on a comparison result between a first estimation metric using the uplink RSs and the first channel estimation result and a second estimation metric using the uplink RSs and the second channel estimation result.

2. The electronic device of claim 1,
wherein the at least two slots of the plurality of slots are consecutive in a time domain, and
wherein the RS symbols in the set of RS symbols are consecutive in total RS symbols of the at least consecutive two slots.

3. The electronic device of claim 1,
wherein the instructions, when executed by the at least one processor, cause the electronic device to:
in a case that the first estimation metric is larger than the second estimation metric, obtain the channel estimation result, based on channel estimation for RS symbols of slots including the estimation slot; and
in a case that the first estimation metric is not larger than the second estimation metric, obtain the channel estimation result, based on channel estimation for RS symbols of the estimation slot.

4. The electronic device of claim 3,
wherein the first estimation metric indicates the number of resource elements (REs) in which a phase of a first equalization value using the first channel estimation result is within a threshold range, and
wherein the second estimation metric indicates the number of REs in which a phase of a second equalization value using the second channel estimation result is within a threshold range.

5. The electronic device of claim 4,
wherein the first equalization value is determined based on the first channel estimation result, an uplink sequence in the estimation RS symbol, and a received signal in the estimation RS symbol, and
wherein the second equalization value is determined based on the second channel estimation result, the uplink sequence in the estimation RS symbol, and the received signal in the estimation RS symbol.

6. The electronic device of claim 5, wherein the uplink sequence in the estimation RS symbol is determined in accordance with an antenna port corresponding to the received signal in the estimation RS symbol and a position of the estimation RS symbol.

7. The electronic device of claim 3, wherein the instructions, when executed by the at least one processor individually or collectively, cause the electronic device to:
demodulate uplink data in the estimation slot based on the channel estimation result.

8. The electronic device of claim 1,
wherein the number of the plurality of slots in accordance with slot aggregation is 2, 4, or 8,
wherein uplink data in the at least two slots are received in a same frequency region, and
wherein the uplink RSs comprises demodulation reference signals (DMRSs) for the uplink data.

9. The electronic device of claim 1, wherein the RS symbol adjacent to the estimation RS symbol is included in the estimation slot including the estimation RS symbol.

10. The electronic device of claim 1,
wherein the estimation RS symbol is a leading symbol among the RS symbols of the estimated slot, and
wherein the RS symbol adjacent to the estimation RS symbol is included in a previous slot adjacent to the estimation slot.

11. A method performed by an electronic device, the method comprising:
obtaining uplink reference signals (RSs) in an estimation RS symbol of an estimation slot among a plurality of slots for uplink transmission;
obtaining a first channel estimation result for a set of RS symbols, which is different from the estimation RS symbol and mapped across at least two slots of the plurality of slots for uplink transmission;
obtaining a second channel estimation result for an RS symbol adjacent to the estimation RS symbol among RS symbols of the set of RS symbols; and
obtaining a channel estimation result for the estimation slot, based on a comparison result between a first estimation metric using the uplink RSs and the first channel estimation result and a second estimation metric using the uplink RSs and the second channel estimation result.

12. The method of claim 11,
wherein the at least two slots of the plurality of slots are consecutive in a time domain, and
wherein the RS symbols in the set of RS symbols are consecutive in total RS symbols of the at least consecutive two slots.

13. The method of claim 11, further comprising:
in a case that the first estimation metric is larger than the second estimation metric, obtaining the channel estimation result, based on channel estimation for RS symbols of slots including the estimation slot; and
in a case that the first estimation metric is not larger than the second estimation metric, obtaining the channel estimation result, based on channel estimation for RS symbols of the estimation slot.

14. The method of claim 13,
wherein the first estimation metric indicates the number of resource elements (REs) in which a phase of a first equalization value using the first channel estimation result is within a threshold range, and
wherein the second estimation metric indicates the number of REs in which a phase of a second equalization value using the second channel estimation result is within a threshold range.

15. The method of claim 14,
wherein the first equalization value is determined based on the first channel estimation result, an uplink sequence in the estimation RS symbol, and a received signal in the estimation RS symbol, and
wherein the second equalization value is determined based on the second channel estimation result, the uplink sequence in the estimation RS symbol, and the received signal in the estimation RS symbol.
